# EUROPEAN PATENT SPECIFICATION

(11) **EP 3 459 693 B1**
(45) Date of publication and mention of the grant of the patent: **07.06.2023**
(21) Application number: 18196387.7
(22) Date of filing: 24.09.2018
(51) Int. Cl.: B25J 11/00, B25J 13/08, B25J 9/16, B25J 15/00, B25J 19/02, B25J 9/00, B25J 15/04, B22D 41/14, B22D 45/00, B22D 41/00

(54) **SEMI-AUTOMATED SYSTEM AND METHOD FOR PERFORMING MAINTENANCE OPERATIONS OF A DRAWER OF A LADLE IN SAFETY CONDITIONS**
HALBAUTOMATISCHES SYSTEM UND VERFAHREN ZUR DURCHFÜHRUNG VON WARTUNGSARBEITEN AN EINER SCHUBLADE EINER GIESSPFANNE UNTER SICHERHEITSBEDINGUNGEN
SYSTÈME SEMI-AUTOMATIQUE ET PROCÉDÉ POUR ÉFFECTUER DES OPERATIONS D'ENTRETIEN D'UN TIROIR D'UNE POCHE DANS DES CONDITIONS DE SÉCURITÉ

(30) Priority: 25.09.2017 IT 201700106914
(43) Date of publication of application: 27.03.2019
(73) Proprietor: BM Group Holding S.p.A., 38083 Borgo Chiese (TN) (IT); Scuola Superiore di Studi Universitari e di Perfezionamento Sant'Anna, 56127 Pisa (IT)
(72) Inventor: BOTTINI, Mirko, 38083 Borgo Chiese (TN) (IT); TONINI, Andrea, 38089 Storo (TN) (IT); COLLA, Valentina, 56017 San Giuliano Terme (PI) (IT); BUZZELLI, Andrea, 67031 Castel di Sangro (AQ) (IT); MATINO, Ruben, 74014 Manduria (TA) (IT)
(74) Representative: Iannone, Carlo Luigi

(56) References cited:
- WO-A2-2010/049161
- JP-A- 2005 308 255
- JP-A- 2017 043 718
- US-A1- 2010 017 027
- US-A1- 2010 057 254
- US-A1- 2015 273 580

## Description

The present invention refers to a semi-automated system for performing maintenance operations of a drawer of a ladle in safety conditions and to a relative maintenance method.

The ladle is a recipient internally coated with refractory material adapted for containing molten metal and is used in the steel industry to move the molten metal inside blast furnaces in order to proceed with the production process of future finished or semi-worked metal products, like for example cakes, billets, wire rods, etc.

The ladle, once filled with molten metal, generally steel, is transferred into the continuous casting station and the steel contained is poured into the tundish, by opening a tapping hole in the lower part of the ladle, actuated by a hydraulic cylinder by a device called drawer, until the ladle is empty. In particular, the molten metal transits through a tapping hole present in such a drawer.

At the end of the tapping step, the ladle is brought to a suitable maintenance area of the drawer, to restore it and for the relative control thereof.

The tapping drawer, also called discharging drawer, is the element of the ladle that, when it is closed, ensures that the molten metal is seal held and prevents it from coming out. When it is open, on the other hand, it ensures the constant tapping of the molten metal.

Figures 1 to 3 illustrate a perspective view of a discharging drawer, indicated with reference numeral 100, in closed configuration (figure 1), open configuration (figure 2) and open configuration with fixed plate removed (figure 3), respectively.

Figures 26 to 28 illustrate a perspective view of a different discharging drawer, also indicated with reference numeral 100, in almost closed configuration (figure 26), open configuration (figure 27) and open configuration with fixed plate removed (figure 28), respectively.

The drawer 100 comprises a fixed portion 101 fixed to the ladle and a mobile portion 102, able to be opened with respect to the fixed portion 101.

The fixed portion 101 is associated with a fixed refractory plate 103 comprising a fixed hole 105, whereas the mobile portion 102 is associated with a mobile refractory plate 104 comprising a mobile hole 106. The fixed portion 101 is also associated with the so-called discharger 107 consisting of a perforated cylinder, which faces inside the ladle.

The correct holding of the mobile refractory plate 104 with the fixed refractory plate 103 during the filling steps of the ladle until transportation in continuous casting ensures the correct holding of the ladle. At the moment of tapping of the molten metal the drawer 100 is hydraulically actuated to move the mobile refractory plate 104 so that its hole 106 aligns with the hole 105 present on the fixed plate 103 and with the hole 108 of the discharger 107, defining the so-called tapping hole of the molten metal.

During the tapping step the components of the discharging drawer 100 can be moved many times to adjust the flow of molten metal and keep the level of steel in the tundish constant during casting.

At the end of tapping, i.e. when the ladle has emptied, the drawer 100 is closed again and the ladle is removed.

It should be considered that following the outflow of molten metal, blockages, deposits, waste of solidified metallic material are created at the tapping hole, as a result of cooling. These blockages, partial or total, can compromise the hold in a subsequent work cycle.

For this reason, the ladle, after every casting, is systematically taken into the suitable maintenance area, for a series of checks, controls and possible replacements of parts most subject to wearing.

During the maintenance cycle the biggest drawbacks consist of the fact that all of the operations are carried out manually and thus imprecisely, since they are not very repeatable. Therefore, the maintenance operations and the relative times vary greatly, with consequent negative repercussions on the production cycle.

Moreover, an operation of this type is inefficient, in particular in large steel plants, where it is necessary to manually move components, such as refractory plates, which can weigh even tens of kilogrammes with the risk of them being housed in the drawer in a not very precise manner.

Indeed, in steel works there are frequently accidents during the maintenance process of the drawer, due to the heat or the accidental falling of the components to be replaced. Moreover, the worker is greatly subject to tiring and to stress-related injuries due to the continuous lifting of weights.

Another drawback concerns the fact that, whenever the maintenance process is not carried out correctly, the risks of serious accidents due to the escape of molten metal increase exponentially.

The operations necessary for the maintenance of the drawer are very complex and precisely for this reason they are still carried out entirely by workers forced to work in harsh conditions.

For example, the worker must use heavy protective clothing against the heat, as well as protective masks for the face, in order to work in environmental conditions where the temperature reaches 60°C and where the surrounding structures reach 200°C. The worker must also use oxygen lances for cleaning the hole of the discharger, which reach usage temperatures close to 4000°C, thus with high risks of burns or being struck by sparks.

The components of the drawer that are replaced are plates made of refractory material that have very high weights, generally greater than 25kg.

Moreover, the work environment is very dirty and dusty and therefore there are high risks of inhaling dusts.

The operator works on a mobile platform without a railing that facilitates the maintenance operations of the drawer, but at the same time subjects him/her to the risk of falling.

The maintenance cycle of ladles is a well-established process in the production cycle of steel. The operations are entrusted to workers that receive from their communication system all of the information necessary to restore every single ladle. At the end of the maintenance operations the same worker certifies that the process has been completed.

This approach to maintenance of course produces some types of risk both for the worker and for the correct maintenance process, such as the risks of accidents or injury due to burns, exposure to smoke and dust, falls. Moreover, since it is extremely tiring work it causes problems in the medium and long terms for workers. Moreover, since the process is entrusted to the worker, a possible error in the procedures can become a cause of malfunctioning of the drawer with a further increase of the risk of accidents. A ladle full of molten steel subjects the drawer to enormous pressures. In the case of malfunctioning, steel can escape, with consequent destruction of the drawer and pouring of molten steel on the structures present in the area below.

The document US 2010/017027 A1 discloses a system according to the preamble of claim 1.

US 2010/057254 A1 and WO 2010/049161 A2 further belong to the prior art.

The main task of the present invention consists of making a semi-automated system that avoids the drawbacks and overcomes the limits of the prior art, ensuring maintenance operations of a drawer of a ladle in safety conditions.

In this task, a purpose of the present invention is that of making a semi-automated system that carries out the maintenance of the drawers of ladles in a repeatable and precise manner to fully re-establish the efficiency thereof.

Another purpose of the invention consists of making a semi-automated system that avoids those performing the maintenance of the drawers from working in risky conditions.

Yet another purpose of the invention consists of replacing the manual intervention by workers in the riskiest and heaviest operations, protecting the well-being of the works themselves and, for example, stopping workers from having to lift heavy loads.

Yet another purpose of the invention consists of drastically reducing the time dedicated to the maintenance of the ladles.

Another purpose of the invention consists of making a semi-automated system that can carry out the maintenance of different types of drawers of different types of ladles in a highly flexible and adaptable manner.

Another purpose of the invention consists of making a semi-automated system that can easily operate in pre-existing steel plants, adapting to the layout thereof.

A further purpose of the invention consists of making a semi-automated system that is capable of giving the greatest guarantees of reliability and safety in use.

Another purpose of the invention consists of making a semi-automated system that is easy to carry out and the use of which in the steel industry is economically competitive if compared with the prior art.

Another purpose of the invention is to guide the maintenance operations through the data and the coordinates obtained by an artificial viewing system.

Another purpose of the invention is to make a cell that collects technical, dimensional, process data, etc., objectively since it is derived from automated systems, not being influenced by the error of human subjectivity.

Another purpose of the invention is the ability to provide these data to higher level systems (e.g., "cloud") that through statistical analysis (e.g., "Big Data Analysis") can identify the action points to create a prediction of failure, as well as an improvement of the process, for example in terms of efficiency.

Another purpose of the invention is to provide the detected process data to the manufacturers of refractories so that they can determine the best type of refractory for the specific type of steel production.

The task outlined above, as well as the stated purposes and others that will become clearer hereinafter, are accomplished by a semi-automated system for performing maintenance operations of a drawer of a ladle in safety conditions as stated in claim 1, and by a corresponding semi-automated method as stated in claim 11.

Other characteristics are provided for in the dependent claims.

Further characteristics and advantages will become clearer from the description of a preferred, but not exclusive, embodiment of a semi-automated system for performing maintenance operations of a drawer of a ladle in safety conditions, illustrated for indicating and not limiting purposes with the help of the attached drawings, in which:

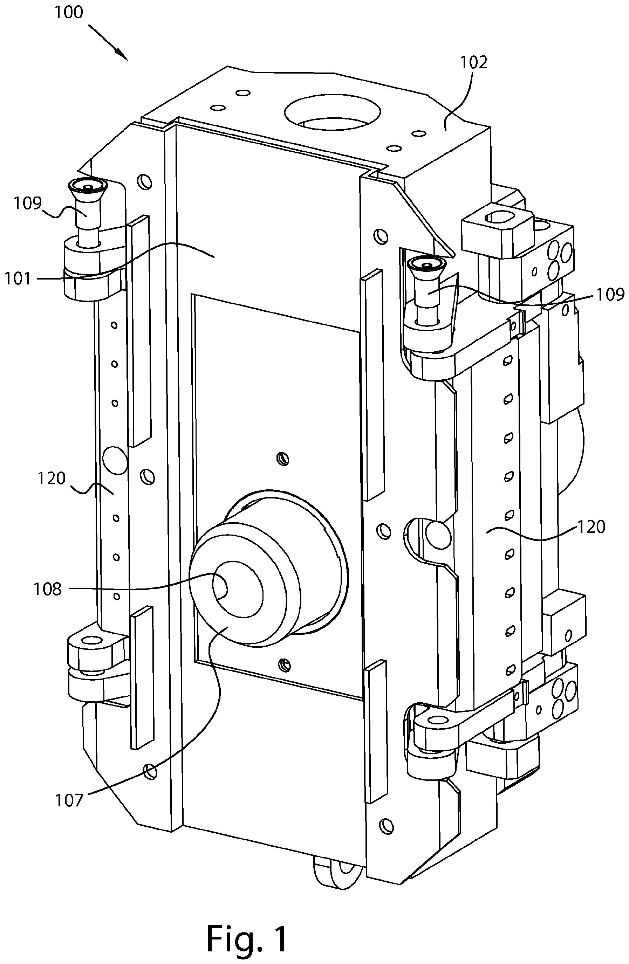

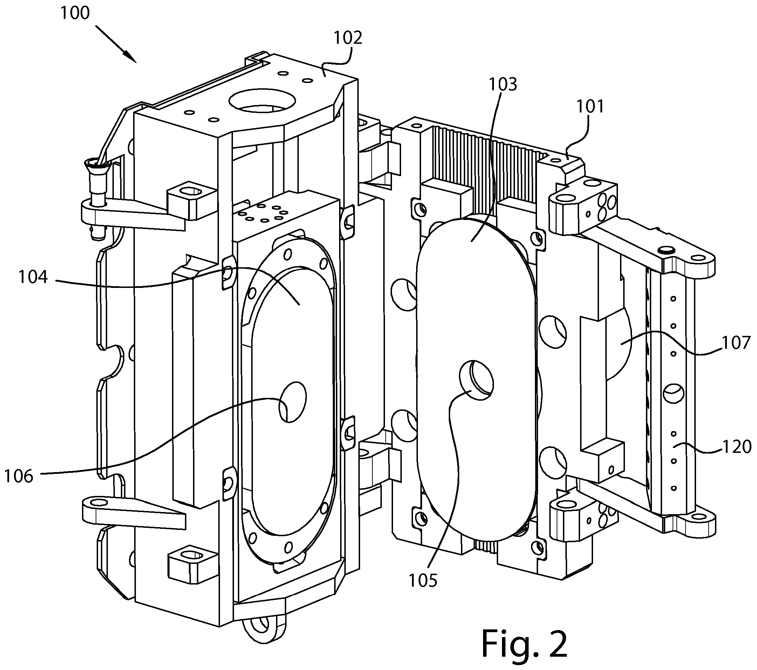

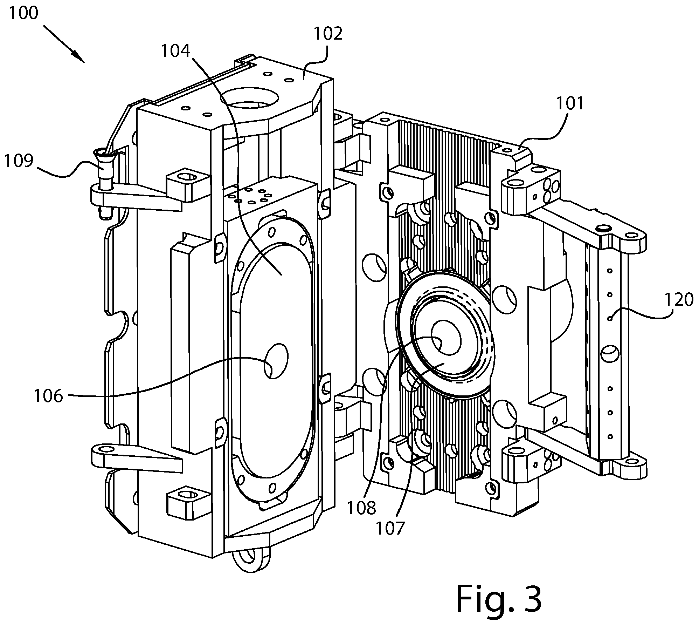

figures 1 to 3 are perspective views of a drawer of a ladle illustrated in closed configuration, open configuration and open configuration with fixed plate removed, respectively;

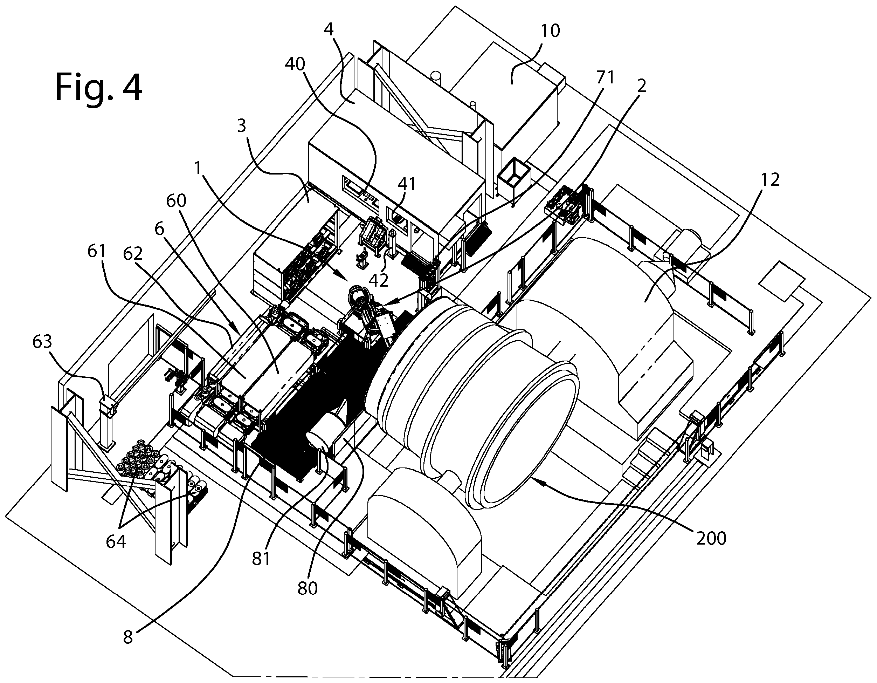

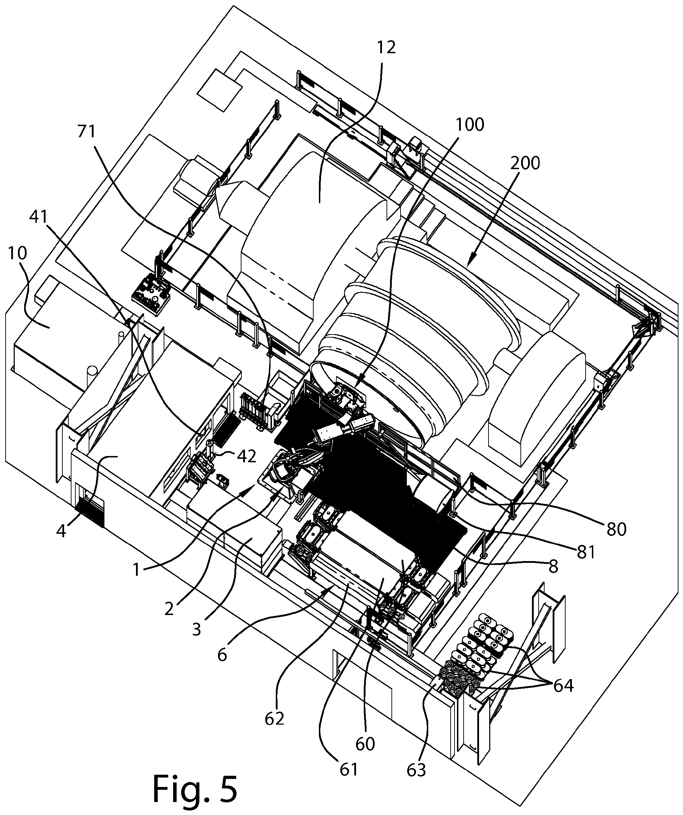

figures 4 and 5 illustrate two different perspective views of the semi-automated system for performing maintenance operations of a drawer of a ladle in safety conditions, according to the invention;

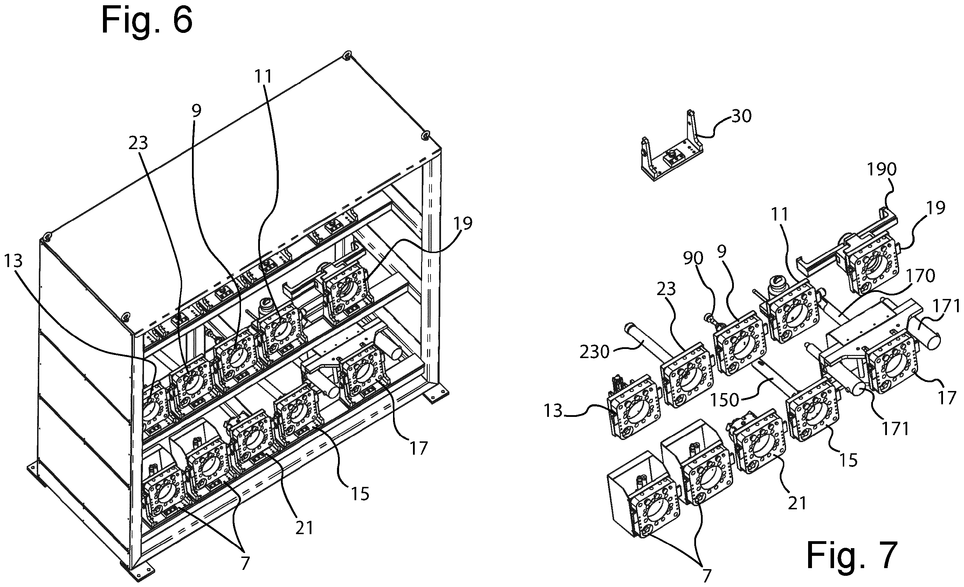

figure 6 is a perspective view of a store of instruments of the semi-automated system, according to the invention;
figure 7 illustrates, in a perspective view, a plurality of instruments of the semi-automated system, according to the invention;

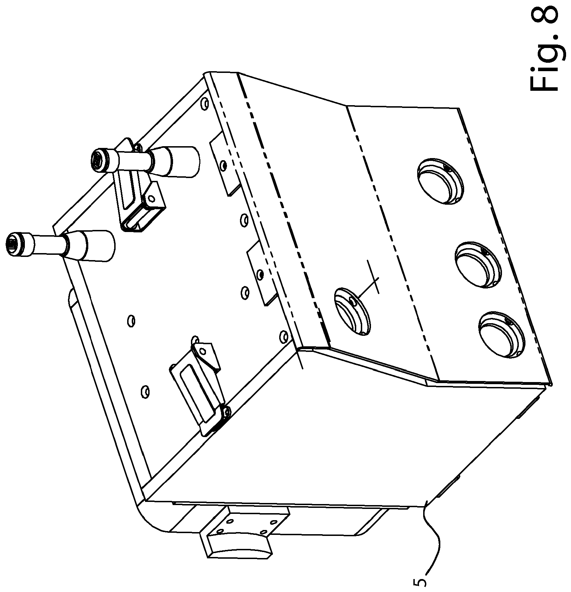

figure 8 is a perspective view of a viewing instrument of the semi-automated system, according to the invention;

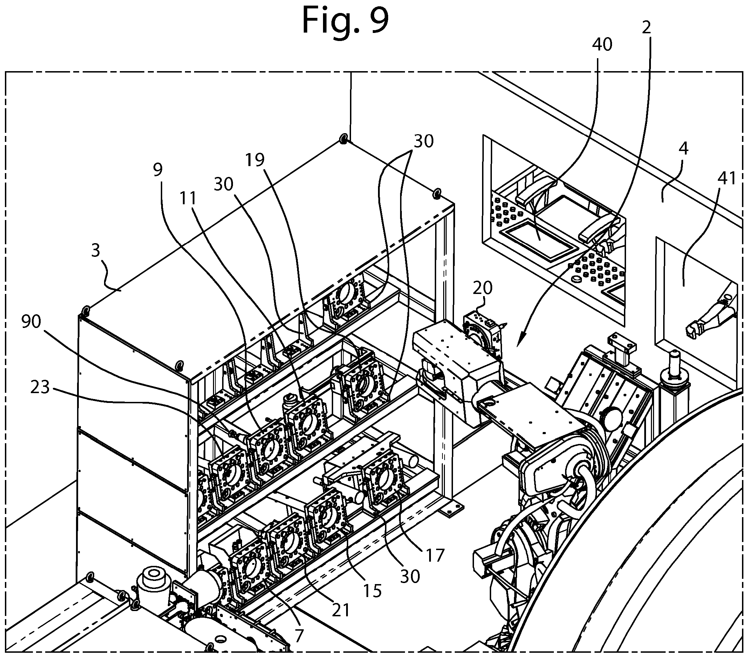

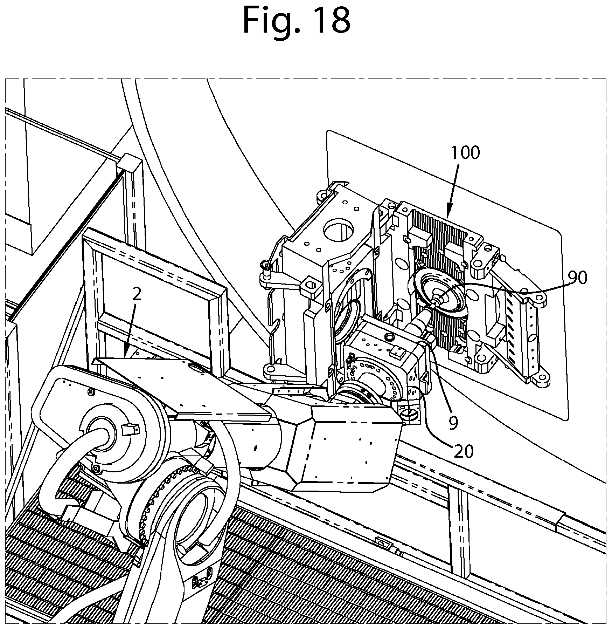

figures 9 to 25 illustrate the semi-automated system, according to the invention, in different operative configurations, described in detail hereinafter;

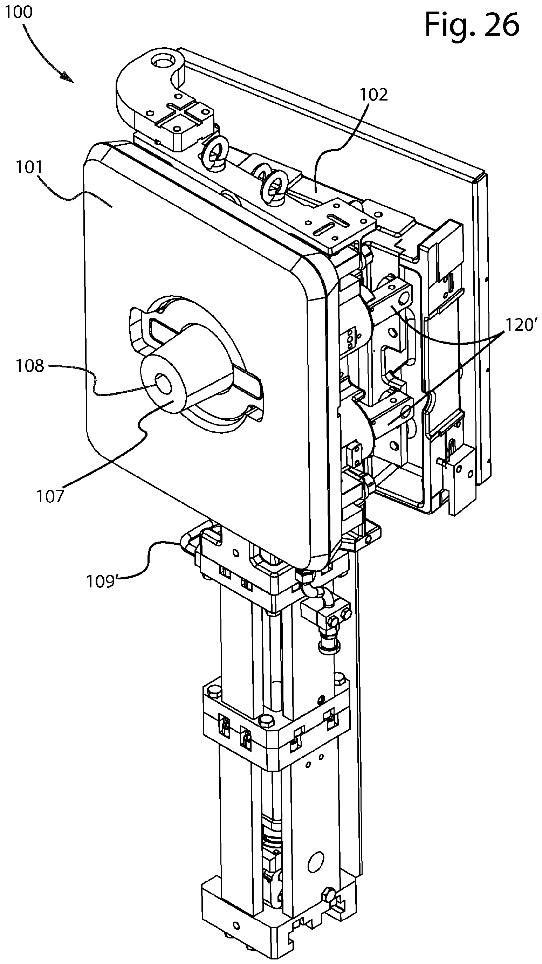

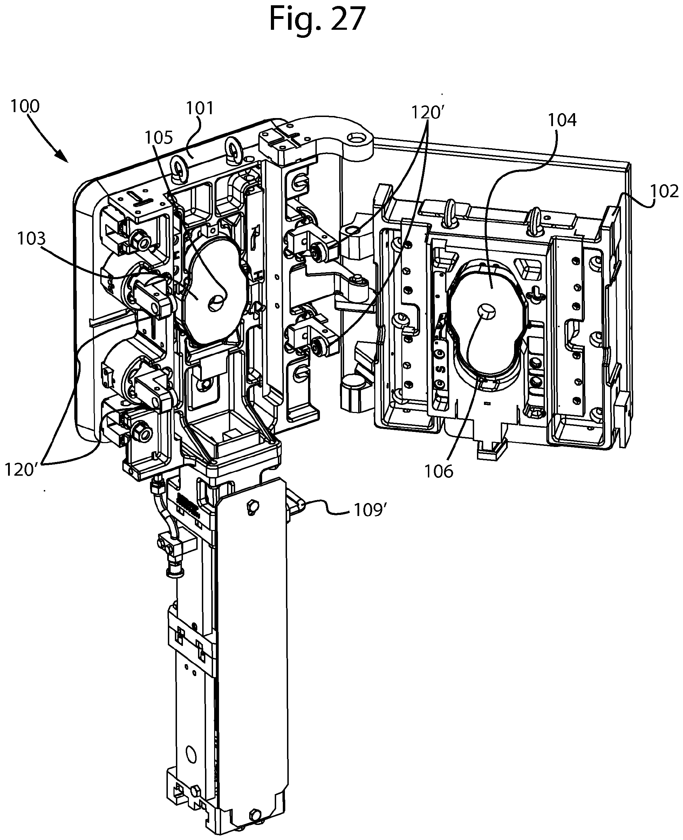

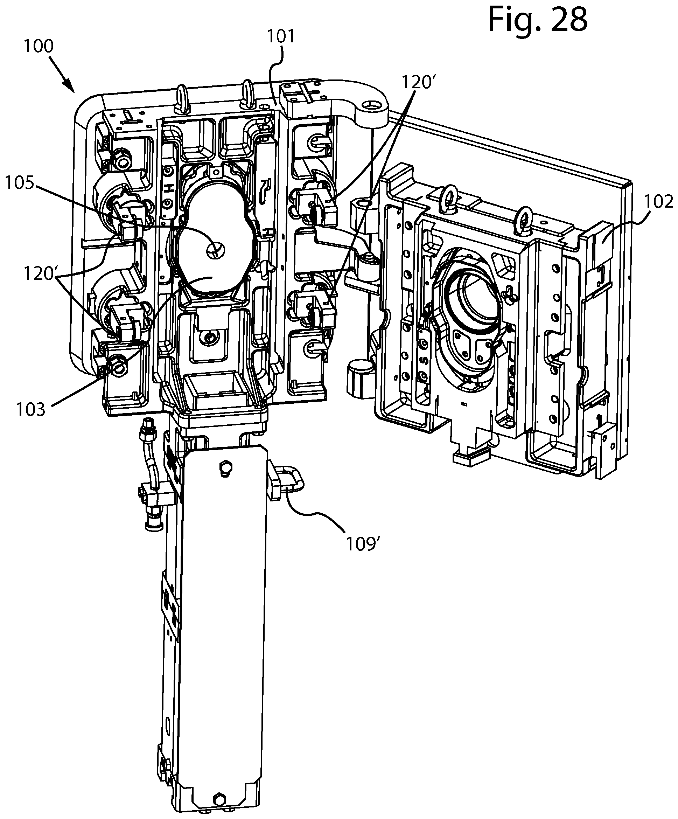

figures 26 to 28 are perspective views of a different drawer of a ladle illustrated in almost closed configuration, open configuration and open configuration with fixed plate removed, respectively;

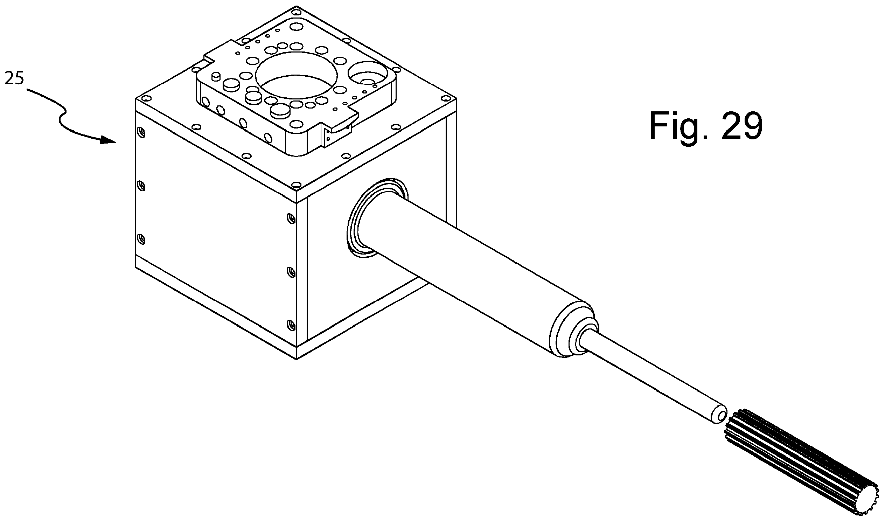

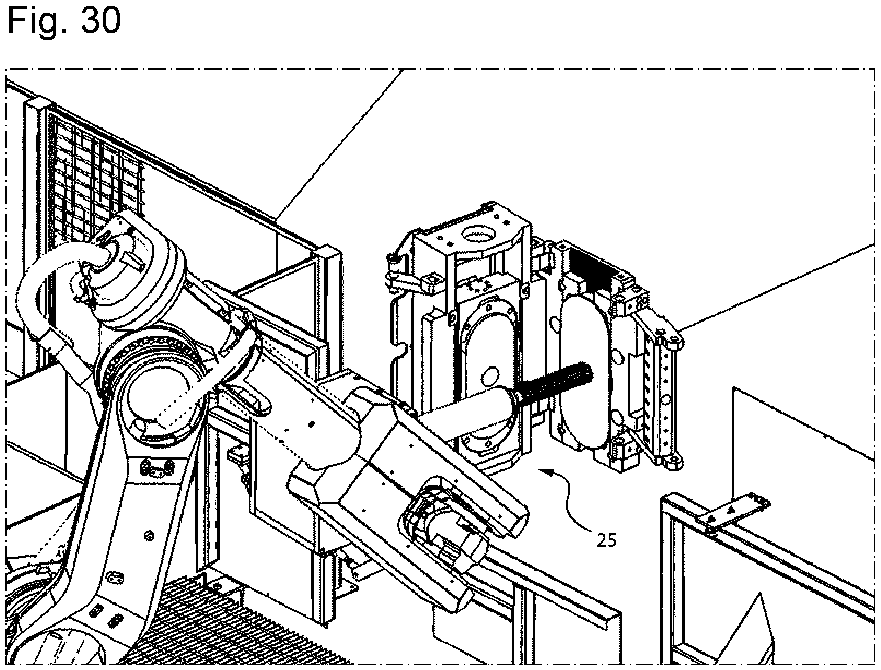

figures 29 and 30 respectively represent an instrument for repairing the inner surface of the tapping hole through refractory mortar and the same instrument shown in operative condition during the repair step;

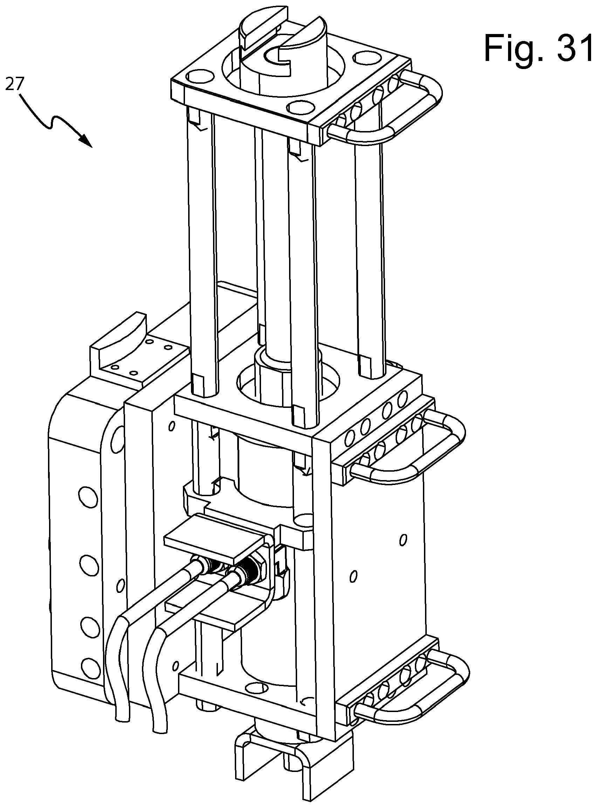

figure 31 represents a hydraulic cylinder instrument that allows the sliding of the plates and the opening of the drawer in certain types of drawer ladle.

With reference to the quoted figures, the semi-automated system, globally indicated with reference numeral 1, is adapted for performing maintenance operations of a drawer 100 of a ladle 200 in safety conditions.

According to the invention, the semi-automated system 1 comprises a robotic device 2 adapted for carrying out a plurality of operations on said drawer 100 through a plurality of instruments 5, 7, 9, 11, 13, 15, 17, 19, 21, 23, 25, 27 housed in a store 3 and able to be picked up by the robotic device 2.

According to the invention, such a plurality of instruments 5, 7, 9, 11, 13, 15, 17, 19, 21, 23, 25, 27 comprises:
- at least one viewing instrument 5 adapted for detecting points of interest of said drawer 100 and/or of components of said drawer 100;
- at least one maintenance instrument 7, 9, 11, 23, 25 adapted for carrying out the maintenance of said drawer 100 and/or of components of said drawer 100 based on the points of interest detected by the viewing instrument 5;
- at least one manipulating instrument 13, 15, 17, 19, 21, 27 adapted for manipulating said drawer 100 and/or the components of said drawer 100 based on the points of interest detected by the viewing instrument 5.

Such a plurality of instruments also comprises at least one repair instrument 25, illustrated in figure 29, adapted for repairing the tapping hole 108 of the said drawer 100 based on the points of interest and on the state of wear detected by the viewing instrument 5.

Advantageously, the semi-automated system 1 comprises an operation room 4 comprising the control terminals 40 of the operations carried out by the system 1, and an access window 41 to the work area of the robotic device 2. All of the routine manual operations able to be carried out by an operator are carried out exclusively from inside the operation room 4 through such an access window 41.

In particular, such an operation room 4 is basically a container equipped with two distinct rooms. A first room contains the control consoles, the monitors and the panels 40 for the operators, and it is equipped with air that is conditioned and filtered of dust, as well as systems for controlling the room temperature. The second room is separated from the first with a suitable sliding door and is used by the operator for the preparation operations of the components of the drawer 100, in synergy with the robotic device 2, which, as explained hereinafter, in certain operative steps positions the components of the drawer in front of the access window 41 so that the operator, from inside the operation room 4, can safely carry out the required operations.

The semi-automated system 1 advantageously comprises a deposit 6 of a plurality of components of the drawer 100. The robotic device 2 is configured to pick up such components from the deposit 6 through at least one manipulating instrument 13, 15, 17, 19, 21, 27.

Preferably, the deposit 6 comprises at least one feeding belt 60, 61, 62 configured to transport one or more of the components of the drawer 100 to the work area of the robotic device 2.

Advantageously, the system 1 comprises a manipulating device 63 adapted for picking up the components of the drawer 100 to arrange them in the deposit 6. Such a manipulating device 63 is preferably a manipulator for de-palletising the pallets 64 of components of the drawers 100, adapted for assisting the arrangement, by an operator, of such components on the feeding belts 60, 61, 62, through the zeroing of the weight of such components during loading on the belts.

Advantageously, there are three feeding belts 60, 61, 62 adapted for respectively transporting the following components of un drawer 100: mobile refractory plate 104, fixed refractory plate 103 and discharger 107.

Such feeding belts can be suitably designed as a function of the type of drawer 100 used and the relative components.

The system 1 advantageously comprises, in the work area of the robotic device 2, a platform 8 movable towards and away from the drawer 100 of the ladle 200. Such a platform 8 comprises a heat shield 80 and a ventilation device 81. The platform 8 can be used safely by an operator to carry out extraordinary, non-routine, manual operations. Indeed, the routine operations are carried out from inside the operation room 4, as described above. The ventilation device 81 is actuated whenever the presence of an operator is detected on the platform 8 and makes it possible to reduce the perceived heat coming from the ladle 200.

Advantageously, the system 1 comprises a climate-controlled control room 10 containing the main electrical panel adapted for ensuring the operation of the system 1 autonomously, as well as the automatic recovery of the functionality of the robotic device 2 in the case of an interruption of the mains power, for example through a so-called UPS (Uninterruptible Power Supply).

The robotic device 2 is advantageously an anthropomorphous robot of model and size selected so that such a robot can cover the entire work area and can support the workloads required. The robotic device 2 is advantageously a robot having six axes.

Moreover, such a robotic device 2 advantageously comprises, at the end portion thereof, quick engagement means 20 configured to couple said plurality of instruments 5, 7, 9, 11, 13, 15, 17, 19, 21, 23, 25, 27.

Such quick engagement means 20 are advantageously equipped with systems for supplying air, oil, oxygen and signals for sensors, capable of managing, if required, the different instruments 5, 7, 9, 11, 13, 15, 17, 19, 21, 23, 25, 27.

The robotic device 2 advantageously comprises a heat protection and preferably also a dust protection.

The robotic device 2 is preferably associated with a base block made of electrowelded steel.

Advantageously, the store 3 comprises a plurality of housing structures 30, configured to house the different instruments 5, 7, 9, 11, 13, 15, 17, 19, 21, 23, 25, 27 so that they can be picked up by the robotic device 2, through its quick engagement means 20. Such housing structures 30 are preferably encoded so that each instrument is uniquely associated with a respective housing structure 30.

The ladles can have different dimensions as a function of their use, for example they can have dimensions such as to contain from 80 up to 500 tonnes of metal. The ladles also differ based on the type of steel that is worked. Consequently, the drawers can also have different dimensions and configurations, also based on the model and the manufacturing firm. Advantageously, the semi-automated system 1 is capable of performing maintenance operations of all the various types of drawers in safety conditions, possibly adopting less technical provisions.

The semi-automated system 1 also has perimeter fences and access points to the work area, studied and made to create safe conditions, and to allow a fast exit route in an emergency. The protections are studied based on a careful analysis of the risks that makes not only the work area of the robotic device 2, but also the entire maintenance station of the ladle 200 safe, at all times protecting the workers from falls or collisions with the suspended loads.

Advantageously, the maintenance instruments 7, 9, 11, 23, 25 of the semi-automated system 1 comprise at least one among:
- a first gripper instrument 7 configured to pick up, move and put down a thermal lance 70 adapted for carrying out a cleaning of the tapping hole of the drawer 100;
- a first cleaning instrument 9 comprising an abrasive brush 90 and a dispenser of a cleaning liquid and/or of pressurised air, configured to clean the drawer 100 and/or the components thereof;

- a graphite delivery instrument 11;
- a second cleaning instrument 23 comprising a tubular body 230 configured to clean portions of the drawer 100 and/or of its components;
- a repair instrument 25, represented in figure 29, which allows the application of repair refractory mortar through the rotation of a suitable application system consisting of a lamellar cylinder that makes it possible, at rotation speeds close to 3000 RPM, to apply and at the same time mould the mortar with the purpose of repairing the tapping hole 108 and lengthening the useful life of the relative refractory plates 103, 104, 107.

Advantageously, the manipulating instruments 13, 15, 17, 19, 21, 27 each comprise a manipulating element 130, 150, 151, 170, 190, 210 configured to manipulate a respective component 109, 120, 102, 104, 103, 107 of the drawer 100.

For example, as better explained hereinafter:
- the manipulating instrument indicated with reference numeral 13 comprises a gripper 130 configured to remove and reposition the safety pins 109 of the drawer 100;
- the manipulating instrument indicated with reference numeral 15 comprises a first element 150 for opening and closing the spring packs 120 present at the sides of the drawer 100;
- the manipulating instrument indicated with reference numeral 15 comprises a second element 151 configured to open and close the mobile door 102 of the drawer 100;
- the manipulating instrument indicated with reference numeral 17 comprises a tubular body 170 able to be inserted in the hole 106 of the mobile plate 104 so as to be able to remove it from the door 102 of the drawer 100 and also able to be inserted in the hole 108 of the discharger 107 to remove it from the fixed portion 101 of the drawer 100;
- the manipulating instrument indicated with reference numeral 19 comprises a jaw 190 for gripping and removing the fixed plate 103 from the fixed portion 101 of the drawer 100;
- the manipulating instrument indicated with reference numeral 21 comprises a gripping element 210 adapted for gripping the fixed plate 103, the mobile plate 104 and the discharger 107 from the feeding belts 60, 61, 62;
- the manipulating instrument indicated with reference numeral 27, illustrated in figure 31 that, in the case of other types of drawer where the spring packs are not present, allows the movement of the mobile part 102 with the purpose of blocking and unblocking the system through the use of a wheel and cam system. Through a suitably shaped coupling pin the instrument is coupled by the robot with the drawer and allows the movement of the mobile part 102 and the consequent sliding of the plates 103 and 104.

The present invention also concerns a semi-automated method for performing maintenance operations of a drawer 100 of a ladle 200 in safety conditions comprising the steps of:
- having a robotic device 2 adapted for carrying out a plurality of operations on said drawer 100 through a plurality of instruments 5, 7, 9, 11, 13, 15, 17, 19, 21, 23, 25, 27 housed in a store 3 and able to be picked up by said robotic device 2;
- picking up a viewing instrument 5 from the store 3 through the robotic device 2;
- detecting points of interest of the drawer 100 and/or of components of the drawer 100 through the viewing instrument 5;
- depositing said viewing instrument 5 in the store 3 through the robotic device 2;
- picking up a maintenance instrument 7, 9, 11, 23, 25 from the store 3 through the robotic device 2;
- carrying out the maintenance of the drawer 100 and/or of components thereof based on the points of interest detected by the viewing instrument 5;
- depositing said maintenance instrument 7, 9, 11, 23, 25 in the store 3 through the robotic device 2;
- picking up a manipulating instrument 13, 15, 17, 19, 21, 27 from the store 3 through the robotic device 2;
- manipulating the drawer 100 and/or components thereof based on the points of interest detected by the viewing instrument 5;
- depositing said manipulating instrument 13, 15, 17, 19, 21, 27 in the store 3 through the robotic device 2.

Advantageously, the aforementioned steps can be repeated many times, for example using different manipulating instruments or different maintenance instruments as a function of the specific operations to be carried out.

The operation of the semi-automated system 1 for performing maintenance operations of a drawer 100 of a ladle 200 in safety conditions is described hereinafter, as a non-limiting example, with reference to every single step of a complete routine maintenance procedure of the drawer 100.

Firstly, the semi-automated system 1 receives a series of information relative to the state of the ladle 200 on which to carry out the maintenance, such as the identification number of the ladle 200, the total number of operating cycles made by the ladle 200 and the number of operating cycles carried out by the drawer 100 and/or by components thereof such as the fixed refractory plate 103, the mobile refractory plate 104 and the discharger 107. The system 1, based on the data provided, activates a specific maintenance cycle and the operating sequence is entirely displayed on a monitor present in the operation room 4.

Moreover, the information collected by the viewing instrument 5 decisively influences the sequence and the type of work carried out.

Hereinafter a maintenance procedure that requires the complete maintenance of the drawer 100, and in particular the complete replacement of the relative fixed 103 and mobile 104 plates and of the discharger 107 is described.

In the case in which the complete maintenance of the ladle is not required, due to few cycles carried out by it, it is possible not to replace the plates 103 and 104 and discharger 107, but repair them through the suitable repair instrument illustrated in figures 29 and 30.

The ladle 200 is positioned, through an overhead travelling crane, at the work area of the robotic device 2.

Through the ladle-turning system 12 the ladle 200 is rotated so that the drawer 100 faces the work area of the robotic device 2.

The robotic device 2 picks up the viewing instrument 5 from the store 3 in order to carry out a scanning cycle of the closed drawer 100, identifying a series of points of interest relative for example to the position of the tapping hole and to the position of the gripping points for releasing and opening the drawer 100 or, depending on the drawer used, the coupling position of the cylinder for opening the drawer 100, which will be useful in the subsequent steps, for the positioning of the subsequent instruments. In particular, through a pattern matching algorithm, the side circular holes are identified, which will be used to open the drawer through a suitable instrument, and the distance between them is calculated. The central tapping hole and the centre thereof is also identified, through the same pattern matching algorithm. The minimum, maximum and average distances of such a centre from the inner profile of the discharger 107 are used to evaluate the possible deformation of the opening of the tapping hole with respect to the ideal circular profile, said deformation being due to wear or to material residues.

The viewing instrument 5 comprises integrated 2D and 3D viewing systems.

Advantageously, the viewing instrument 5 also comprises thermal viewing systems.

The image is reconstructed on a suitable monitor inside the operation room 4 and saved in a database. Once the operation of acquiring the points of interest has ended, the robotic device 2 deposits the viewing instrument 5 in the suitable store 3.

The presence of 3D viewing systems in the viewing instrument 5 makes it possible to obtain the distances between the components of the drawer 100 that are framed and scanned on each occasion and to thus define the work points necessary to carry out the subsequent operations. In this way, the semi-automated system 1 can operate on different types of drawers without necessarily knowing exactly the configuration and the geometry of the drawer. Advantageously, the viewing instrument 5 can specifically scan the single work area involved in the single operation, consequently considerably increasing the resolution of the scan itself and if necessary minimising errors and/or display problems due to the presence of dirt or to the fact that the environment has high temperatures.

Moreover, the presence of 3D viewing systems in the viewing instrument 5 makes it possible to make evaluations on the quality of the operations carried out, and allows the operator to validate that the operations carried out are correct.

According to the invention, the viewing system 5 makes it possible to obtain the position of the fixed refractory plate 103 and of the mobile refractory plate 104, so as to calculate the error between the optimal position and the real position of such two components.

Moreover, the viewing system 5 also makes it possible to obtain the diameter and the shape of the tapping hole 108, to determine the type of wear thereof and evaluate whether or not it is suitable to proceed with the replacement of the component.

Moreover, the viewing system 5 can influence the sequence and type of subsequent processing phases based on the state of the observations.

Moreover, the viewing system 5 collects all of the data in a database to carry out "big data analysis" which makes it possible to determine over time: what type of consumable is most appropriate based on the speed of wear between type of steel and refractory used, to define whether a refractory component must be replaced before or after its natural number of work cycles and other actions that can derive from the correlation of the historical data collected.

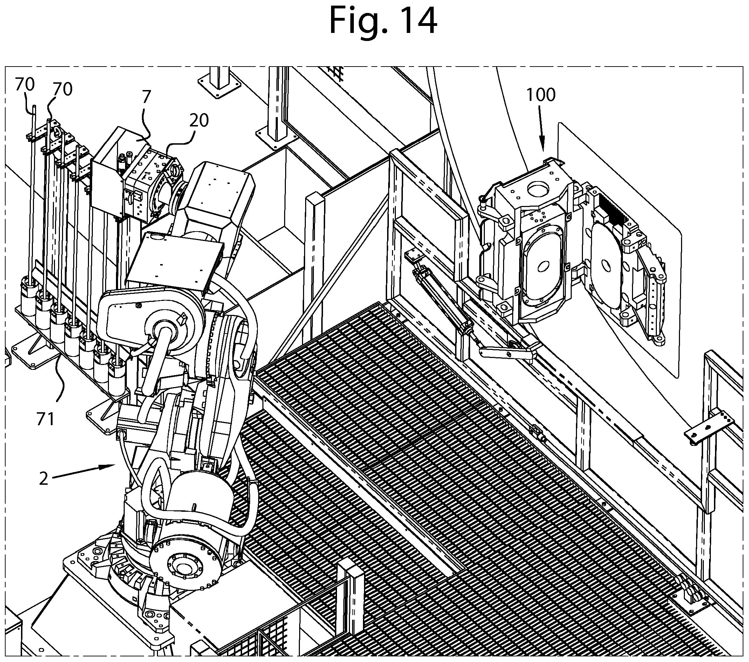

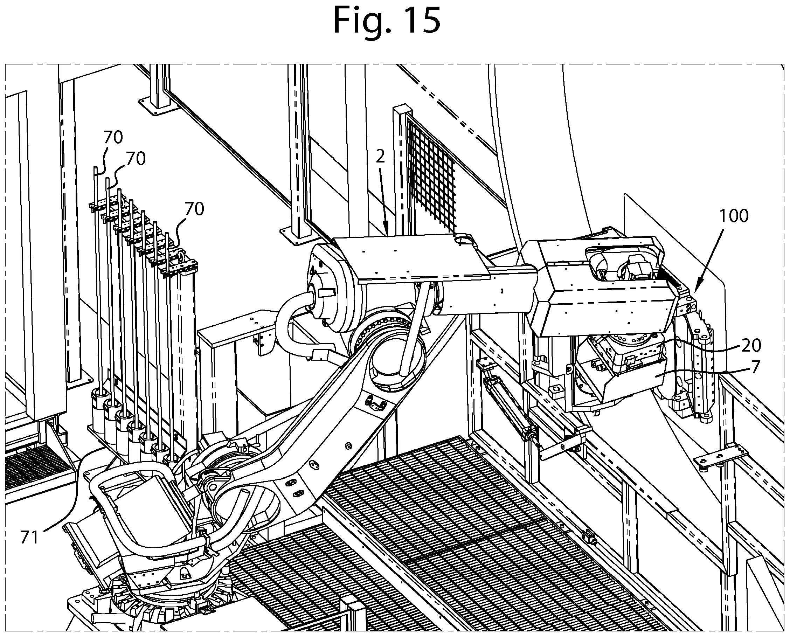

The robotic device 2 at this point can pick up from the store 3 the first gripper instrument 7 configured to pick up, move and put down the thermal lance 70 adapted for carrying out the cleaning of the tapping hole of the drawer 100. A plurality of thermal lances can be housed in a rack 71 arranged in the work area of the robotic device 2. Such thermal lances 70 can be of the oxygen type and can be equipped with a self-igniting torch. The robotic device 2 takes the thermal lance 70 to the tapping hole of the drawer 100 and, through the ignition of the lance through a torch, proceeds to open the hole itself, which is blocked by the steel that has solidified inside it. In the case in which a single lance 70 is not sufficient to unblock the tapping hole, the robotic device 2 eliminates the residue of the consumed lance 70 in a suitable container and picks up a new lance 70 through the first gripper instrument 7, eliminating all of the waste residue present. Figures 14 and 15 respectively illustrate the step of picking up a thermal lance 70 and the cleaning step of the tapping hole of the drawer 100 through such a lance 70. In figures 14 and 15 the drawer 100 is presented in already open configuration.

The first gripper instrument 7 is then put back in the store 3.

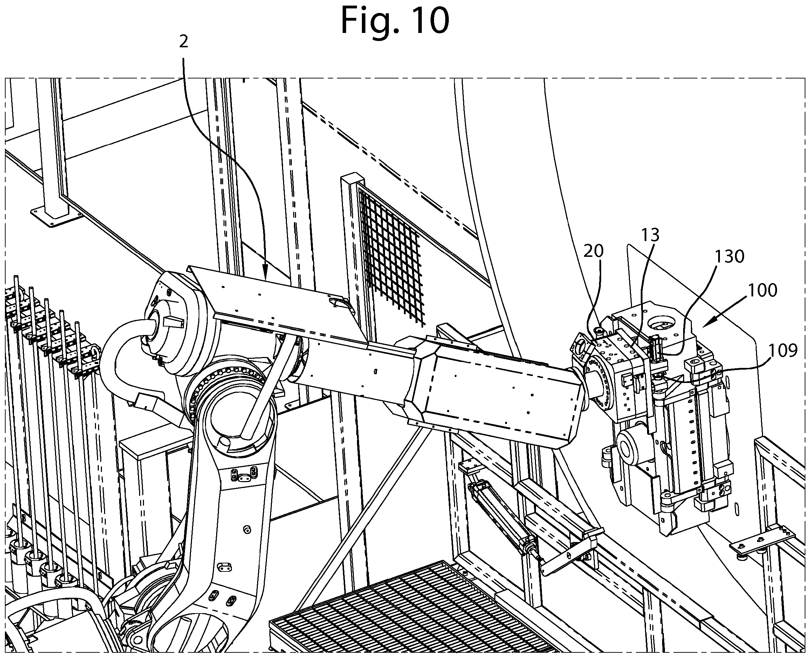

Thereafter, the robotic device 2 picks up from the store 3 a manipulating instrument 13 configured to remove, for example through the gripper 130, the safety pins 109 of the drawer 100, the position of which has been defined previously through the viewing instrument 5. Through such a manipulating instrument 13, the robotic device 2 carries out the removal cycle of all of the safety pins 109 depositing them in a suitable parking slot. This step is illustrated in figure 10.

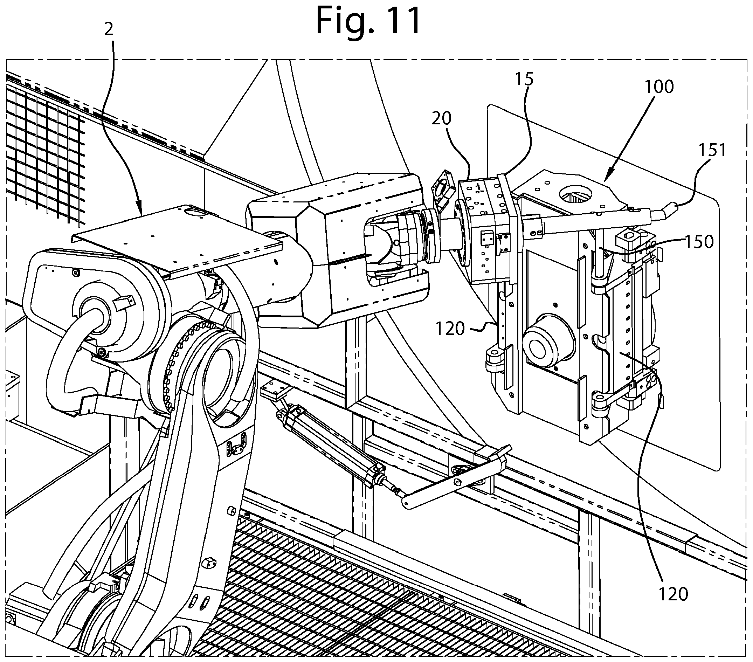

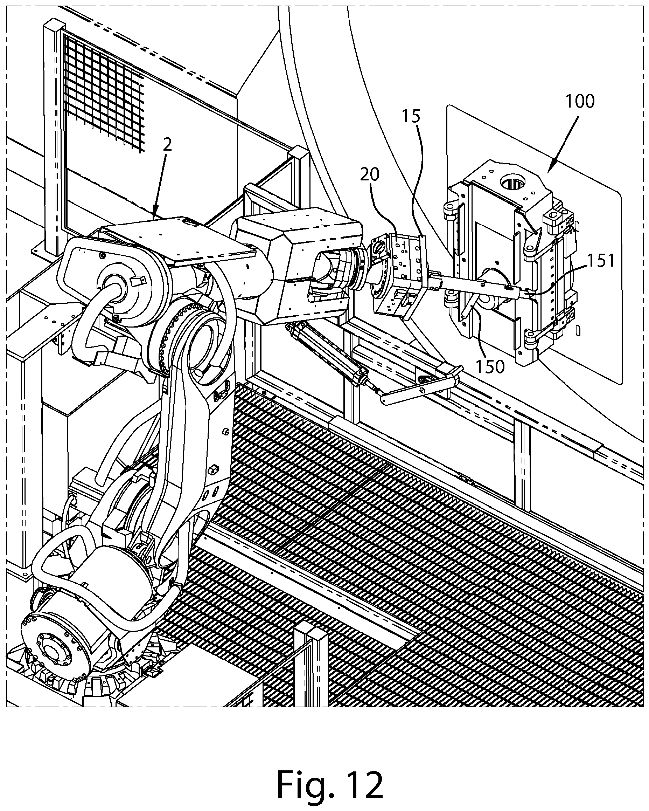

The robotic device 2 then picks up from the store 3 a manipulating instrument 15 configured both to release the spring packs 120 present at the sides of the drawer 100, and to open the drawer 100, as explained better hereinafter, with particular reference to figures 11 and 12, respectively.

In the case of other types of drawer, the opening of the drawer takes place through the unblocking of suitable cam systems moved by the hydraulic cylinder arranged in position by the instrument of figure 31.

In the specific case described here with reference to the drawer of figures 1 to 3, the type of drawer 100 under examination ensures the pressure of the fixed refractory plate 103 against the mobile refractory plate 104 thanks to packs of Belleville washers 120. Indeed, the drawers often have a series of Belleville washers made of harmonic steel on the inside that, when compressed, exert the correct pressure during the various tapping cycles of the steel in continuous casting. Such springs are kept cool with the supply of air; vice-versa, if this did not occur, they would overheat, and the Belleville washers would lose part of their mechanical characteristics, due to a subsequent tempering process. Such overheating, in the subsequent cycle, could cause steel to come out due to the loss of seal. For this reason, the manipulating instrument 15 that releases these spring packs 120 then allowing the opening of the drawer 100, is advantageously equipped with a force control, in order to make sure that the springs maintain the required mechanical characteristics. Also these force data are saved in the database. In the case in which anomalies were found, the cycle is interrupted and the drawer 100 is dismounted for a complete maintenance. The manipulating instrument 15 is then also used to open the drawer 100, again taking advantage of the points of interest previously identified by the viewing instrument 5.

As illustrated in figures 11 and 12, the manipulating instrument 15 comprises a first member 150 adapted for allowing the spring packs 120 to be opened, and a second member 151 adapted for allowing the drawer 100 to be opened.

In the case of a drawer without spring packs, the opening is ensured by a hydraulic cylinder that is mounted and dismounted from the ladle at every maintenance cycle. The robotised system, depending on requirements, provides for the presence of the suitable manipulating instrument of figure 31.

Once the drawer 100 has been opened, the robotic device 2 picks up the viewing instrument 5 again from the store 3 to carry out a scan of the open drawer 100.

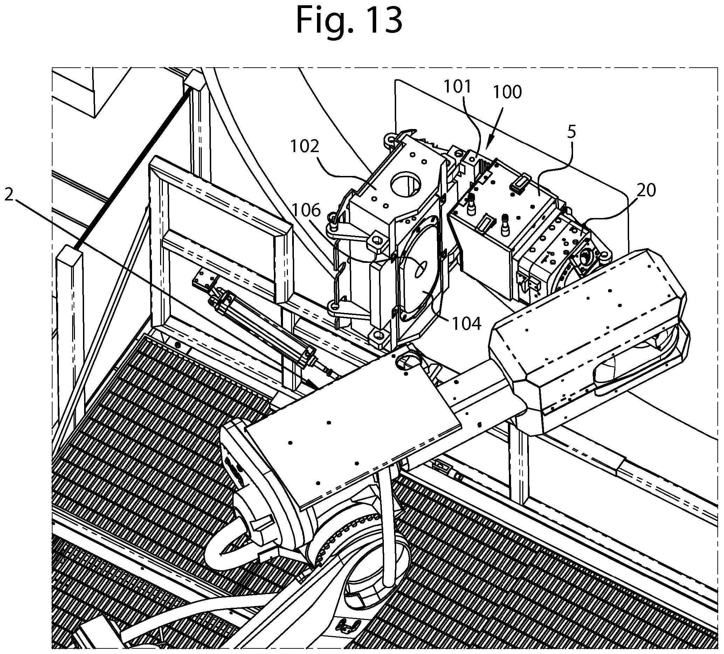

In particular, a series of points of interest on the side of the door 102 are identified, such as to position of the mobile refractory plate 104, of the centre of the hole 106, the housing area of the mobile plate 104 and the two gripping areas of the mobile plate 104, arranged above and below it, which are useful for allowing the robotic device 2 to remove the mobile plate 104 through a suitable manipulating instrument 17. Then the drawer 100 is scanned on the side of the fixed refractory plate 103 and the support planes, the four couplings of the fixed plate 103 with the gripping area of the fixed plate 103, are detected. From the crossing point of the diagonals joining the non-adjacent couplings of the fixed plate 103, it is possible to determine the theoretical centre of the hole 108 of the discharger 107, which is subsequently used to evaluate the deviation between the circular theoretical shape of such a hole and its real shape. The image is reconstructed on a suitable monitor inside the operation room 4 and saved in the database. At the end of the entire operation the robotic device 2 again deposits the viewing instrument 5 in the store 3. This step is illustrated in figure 13.

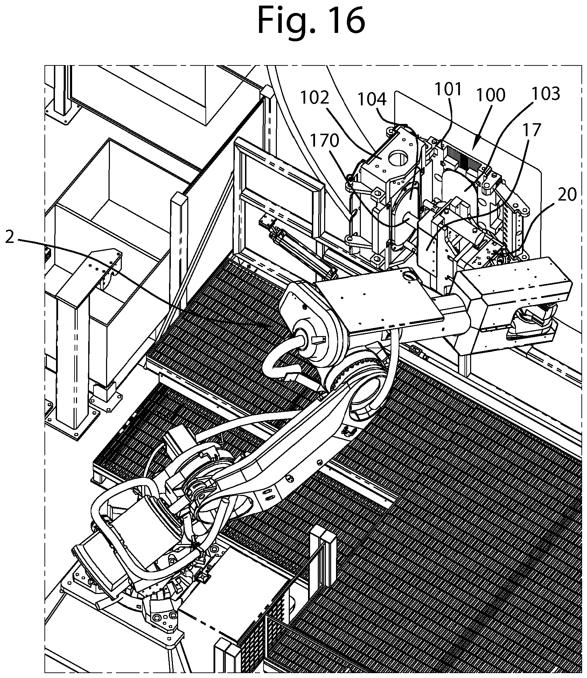

At the end of such a step the robotic device 2 picks up a manipulating instrument 17 from the store 3 for the removal of the mobile refractory plate 104. The mobile refractory plate 104 that has been removed is deposited by the manipulating instrument 17 in a suitable container, to subsequently be recycled and/or suitably restored. This step is illustrated in figure 16. As illustrated in such a figure, the manipulating instrument 17 comprises a tubular body 170 able to be inserted inside the hole 106 of the mobile plate 103 to proceed with the extraction of the mobile plate 103 from the door 102.

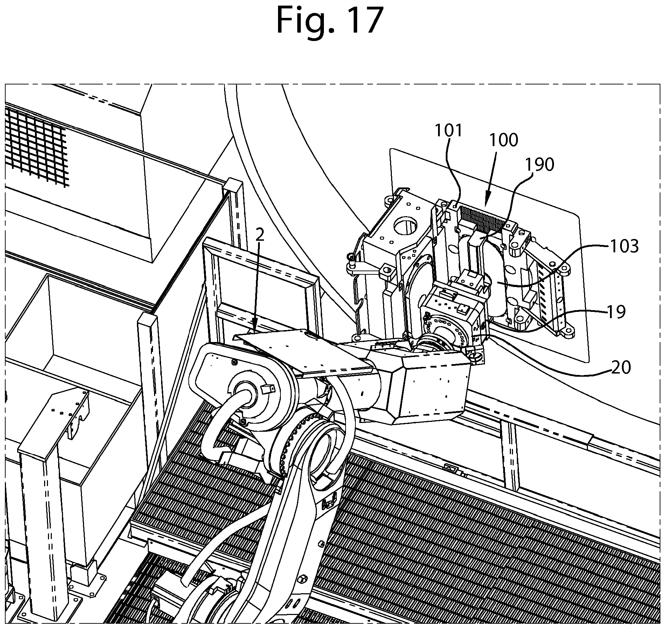

Thereafter, the robotic device 2 picks up a manipulating instrument 19 from the store 3 for the removal of the fixed refractory plate 103. The fixed refractory plate 103 that has been removed is deposited by the manipulating instrument 19 in a suitable container, to be subsequently recycled and/or suitably restored. This step is illustrated in figure 17. As illustrated in such a figure, the manipulating instrument 19 comprises a jaw 190 configured to grip the fixed plate 103.

Once the fixed plate 103 has also been removed, the robotic device 2 picks up from the store 3 a first cleaning instrument 9 comprising an abrasive brush 90 and a dispenser of a cleaning liquid, configured to clean the drawer 100 and/or components thereof. The abrasive brush 90 removes the residue of refractory plate present on the faces of the drawer 100, where the fixed 103 and mobile 104 plates were housed before, and through the aforementioned dispenser takes care of cleaning such removed residue. The dispenser can also be a high pressure air blowing nozzle.

The robotic device 2 picks up the viewing instrument 5 from the store 3 again and carried out the measuring cycle of the diameter and of the profile of the discharger 107. The central hole 108 of the discharger is identified and the possible deformation of the opening of the tapping hole with respect to the ideal circular profile is evaluated, said deformation being due to wear or to material residue. In particular, it is verified that the diameter is in the nominal tolerances. If the measurement of the diameter of the hole 108 of the discharger 107 exceeds the maximum allowed value, or the discharger 107 has already operated for the established maximum number of casts, it must be replaced. The image is reconstructed on a suitable monitor inside the operation room 4 and saved in the database.

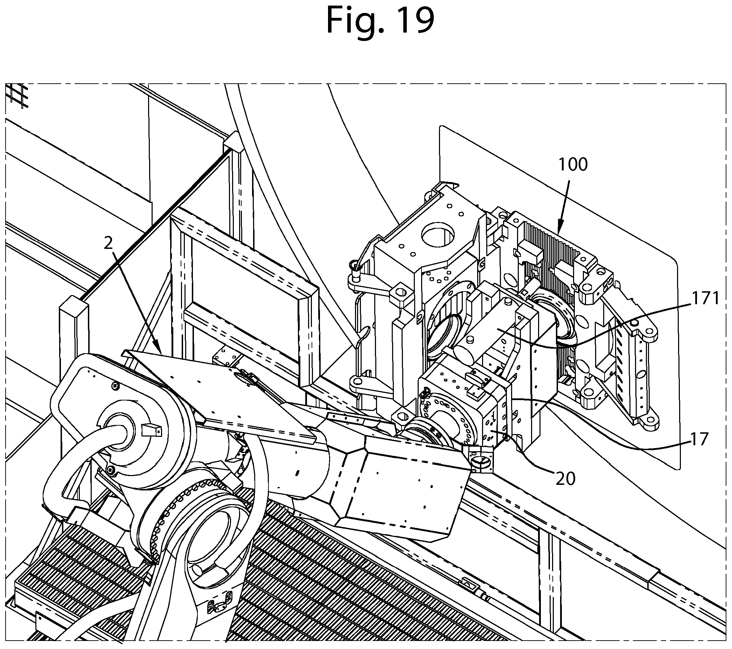

Thereafter, the robotic device 2 picks up the manipulating instrument 17 that, as well as allowing the removal of the mobile refractory plate 104, through the tubular body 170, coupled with two hydraulic cylinders 171 makes it possible to also remove the discharger 107 from the drawer 100. In particular, the tubular body 170 is inserted in the hole 108 of the discharger 107 and coupled with it. The two hydraulic cylinders 171, exerting a force of the order of 15 tonnes, allow the tubular body 170 to remove the discharger 107 from its seat in the drawer 100. The used discharger 107 is then deposited in a suitable container to be recycled and/or suitably restored. This step is illustrated in figure 19.

The robotic device 2 then picks up from the store 3 a second cleaning instrument 23 comprising a tubular body 230 configured to clean portions of the drawer 100 and/or components thereof.

In particular, the second cleaning instrument 23 is configured to accurately clean through-holes present in the drawer 100, such as the housing seat of the discharger 107, once it has been removed.

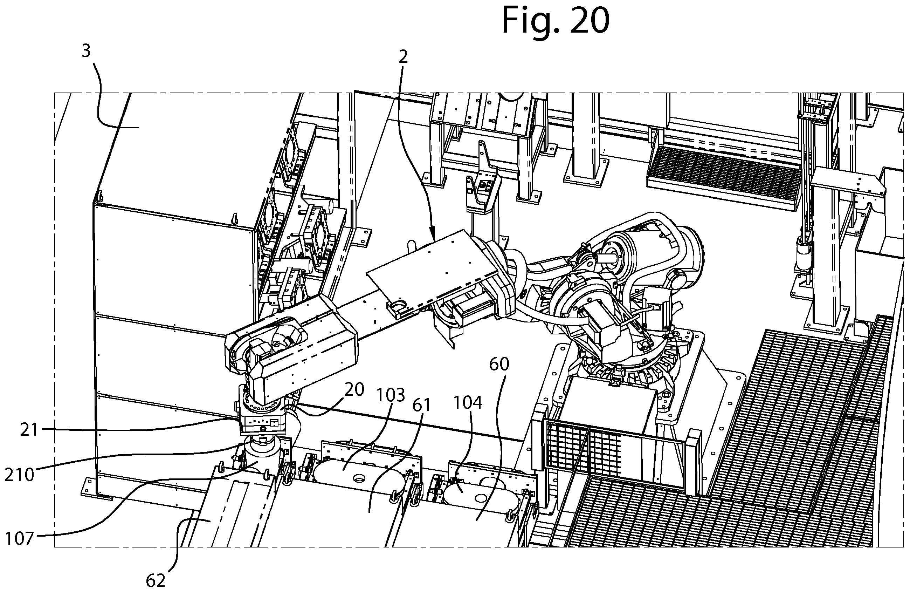

At this point, the robotic device 2 picks up from the store 3 a manipulating instrument 21 configured to grip a discharger 107 from the relative feeding belt 62, as illustrated in figure 20.

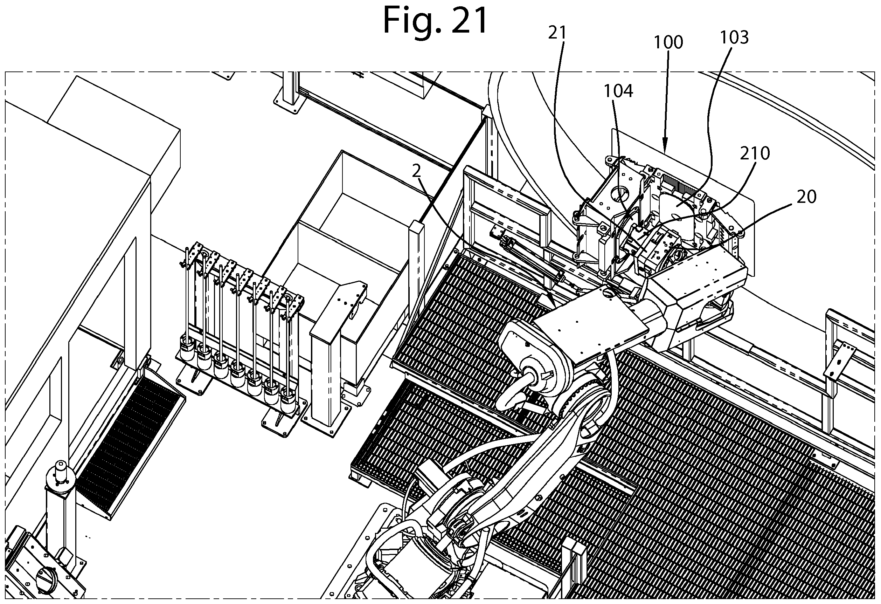

The robotic device 2 then takes the discharger 107 just picked up onto a suitable position 42 arranged in front of the access window 41, as illustrated in figure 21. Through such an access window 41 the operator manually applies an amount of refractory cement on the discharger 107 and enables the robotic device 2 for the insertion of the discharger 107, provided with refractory cement, in the relative housing seat of the drawer 100. During this operation the robotic device 2 carries out the introduction of the discharger 107 perpendicular to the centre of the housing seat, to the exact depth, controlling the final height and the force necessary for the housing, ensuring the perfect tolerance, essential for the correct operation of the drawer 100 and the seal between the discharger 107 and the fixed plate 103. These data will be saved in the database. Once the discharger 107 has been positioned, it is kept in position for about 60 seconds until the solidification of the refractory cement.

With the same manipulating instrument 21 the fixed 103 and mobile 104 refractory plates are also picked up from the feeding belts 60 and 61, and inserted in the respective seats of the drawer 100.

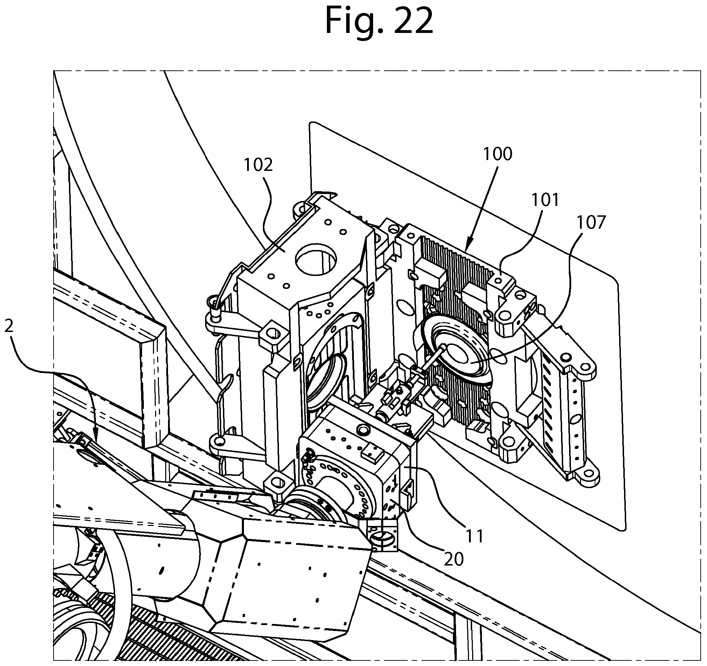

In particular, firstly the mobile plate 104 is picked up and inserted in the door 102 of the drawer 100, as illustrated in figure 22.

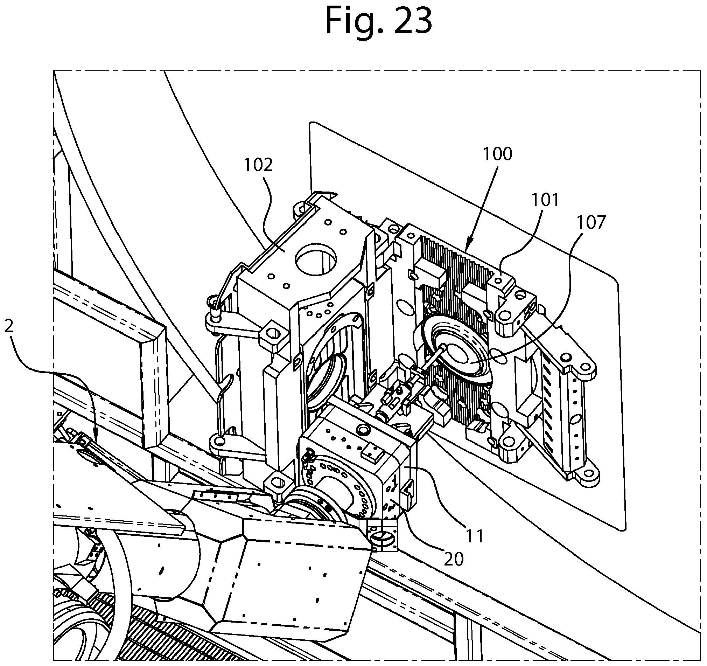

Thereafter, the graphite delivery instrument 11, used to distribute graphite spray on the face of the discharger 107 facing towards the outside of the ladle 200, in order to prevent the subsequent gluing of the fixed refractory plate 103 is picked up from the store 3. This step is illustrated in figure 23.

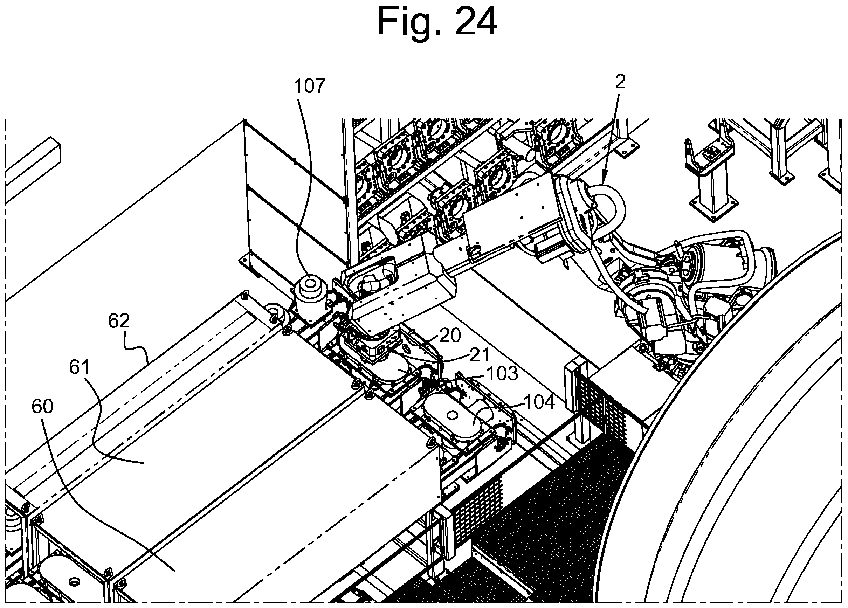

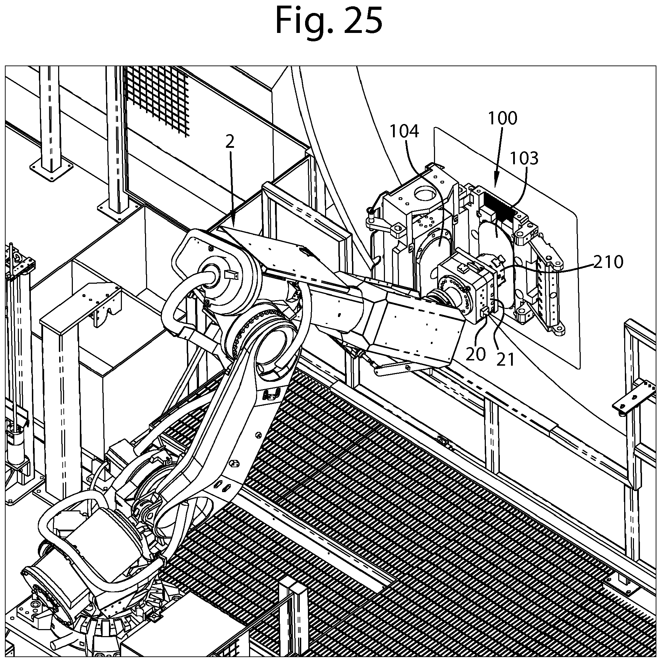

Thereafter, the robotic device 2 picks up the manipulator 21, which is used to pick up the fixed plate 103 from the relative feeding belt 61 and to take it to the position 42 arranged in front of the access window 41, where the operator intervenes to apply the refractory cement. The operation of applying the refractory cement to the fixed plate 104 is particularly delicate since the coupling must be extremely precise. Moreover, such an operation must be carried out very quickly so as to prevent the cement from solidifying before the drawer 100 is closed. The fixed plate 103, provided with refractory cement, is then arranged in the relative seat on the fixed portion 101 of the drawer 100, and the relative data is saved in the database. The steps of picking up and inserting the fixed plate 103 are respectively illustrated in figures 24 and 25.

At this point the robotic device 2 quickly deposits the manipulating instrument 21 in the parking store 3 and takes the manipulating instrument 15 again to carry out the closure of the drawer 100 through the closure of the mobile door 102 and the closure of the spring packs 120 present at the sides of the drawer 100, at the same time controlling the force necessary for the closure, and saving the relative data in the database.

The drawer 100, once closed, is actuated by commanding the suitable hydraulic cylinder. By monitoring the hydraulic pressure during the opening/closing cycle of the drawer 100 it is possible to establish whether all of the components have been positioned correctly and are operating properly. This data is also saved in the database.

Finally, the manipulating instrument 13 is picked up by the robotic device 2 to carry out the insertion of the safety pins 109, able to be picked up from the area where they had been placed at the start of the maintenance, and able to be inserted in the suitable seats to prevent the random opening of the drawer.

At the end of these operations, the ladle 200 is ready for the next casting cycle.

The semi-automated system 1 is capable of operating with different types of drawer 100.

For example, the drawer 100 illustrated in figures 26 to 28 differs from the drawer 100 illustrated in figures 1 to 3 due to the presence of a single safety pin 109' and due to the presence of retaining wheels 120' instead of the spring packs 120. The safety pin 109' can be removed to allow the mobile portion 102 of the drawer 100 to move in the vertical direction so as to free itself from the constraint imposed by the retaining wheels 120' and allow the book-type opening thereof.

The manipulating instrument 13 can thus comprise a gripper 130 configured to remove and reposition the safety pin 109' of the drawer 100, just as the manipulating instrument 15 can operate on the retaining wheels 120' present at the sides of the drawer 100.

In practice, it has been noted how the semi-automated system for performing maintenance operations of a drawer of a ladle in safety conditions and the relative maintenance method, according to the present invention, accomplish the task as well as the predetermined purposes since they make it possible to completely eliminate the presence of people from a dangerous work environment.

More specifically, the system, according to the invention, makes it possible to confine the workers to safe areas of the plant, avoiding subjecting the worker to physically taxing and dangerous operations. Indeed, the worker no longer has to lift weights and is not subjected to high temperatures for long periods. In any case, the work area is in any case suitably ventilated.

A further advantage of the system, according to the invention, consists of improving the repeatability and the precision of the maintenance operations of the drawers.

Yet another advantage consists of being able to collect all relevant data relative to the maintenance process in a database, in order to be able to then more easily identify the causes of possible problems encountered on the drawer when maintenance has been carried out.

A further advantage of the system, according to the invention, consists of being extremely flexible and of being able to adapt to the different maintenance areas present in steel working plants.

A further advantage of the system, according to the invention, consists of the fact that it can operate on different types of drawers.

Yet another advantage of the invention consists of being able to correctly remove the used refractory components and of possibly being able to take care of recycling them and/or restoring them.

## Claims

1. Semi-automated system (1) for performing maintenance operations of a drawer (100) of a ladle (200) in safety conditions, comprising a robotic device (2) adapted for carrying out a plurality of operations on said drawer (100) through a plurality of instruments (5, 7, 9, 11, 13, 15, 17, 19, 21, 23, 25, 27) housed in a store (3) and able to be picked up by said robotic device (2), wherein said drawer (100) comprises a fixed portion (101) fixed to said ladle (200) and a mobile portion (102), able to be opened with respect to said fixed portion (101), said fixed portion (101) being associated with a fixed refractory plate (103) comprising a fixed hole (105), whereas said mobile portion (102) is associated with a mobile refractory plate (104) comprising a mobile hole (106), said fixed portion (101) being also associated with a discharger (107) consisting of a perforated cylinder comprising a tapping hole (108), which faces inside said ladle (200),
**characterised in that** said plurality of instruments (5, 7, 9, 11, 13, 15, 17, 19, 21, 23, 25, 27) comprises:
- at least one viewing instrument (5) comprising 3D viewing systems adapted for detecting points of interest of said drawer (100) and/or of components of said drawer (100) in order to obtain at least the position of the fixed refractory plate (103) and of the mobile refractory plate (104) of said drawer (100), and to obtain the shape of said tapping hole (108);
- at least one maintenance instrument (7, 9, 11, 23, 25) adapted for carrying out the maintenance of said drawer (100) and/or of components of said drawer (100) based on said points of interest detected by said viewing instrument (5);
- at least one manipulating instrument (13, 15, 17, 19, 21, 27) adapted for manipulating said drawer (100) and/or components of said drawer (100) based on said points of interest detected by said viewing instrument (5) .

2. Semi-automated system (1) for performing maintenance operations of a drawer (100) of a ladle (200) in safety conditions, according to claim 1, **characterised in that** it comprises an operation room (4) comprising the control terminals (40) of the operations of said semi-automated system (1) and an access window (41) to the work area of said robotic device (2), all of the routine manual operations able to be carried out by an operator being carried out exclusively from inside said operation room (4) through said access window (41).

3. Semi-automated system (1) for performing maintenance operations of a drawer (100) of a ladle (200) in safety conditions, according to claim 1 or 2, **characterised in that** it comprises a deposit (6) of a plurality of said components of said drawer (100), said robotic device (2) being configured to pick up said components of said drawer (100) from said deposit (6) through said at least one manipulating instrument (13, 15, 17, 19, 21, 27).

4. Semi-automated system (1) for performing maintenance operations of a drawer (100) of a ladle (200) in safety conditions, according to claim 3, **characterised in that** said deposit (6) comprises at least one feeding belt (60, 61, 62) configured to transport one or more of said components of said drawer (100) to the work area of said robotic device (2).

5. Semi-automated system (1) for performing maintenance operations of a drawer (100) of a ladle (200) in safety conditions, according to one or more of the previous claims, **characterised in that** it comprises, in the work area of said robotic device (2), a platform (8) movable towards and away from said drawer (100) of said ladle (200), said platform (8) comprising a heat shield (80) and a ventilation device (81), said platform (8) being able to be used in safety conditions by an operator to carry out extraordinary manual operations.

6. Semi-automated system (1) for performing maintenance operations of a drawer (100) of a ladle (200) in safety conditions, according to one or more of the previous claims, **characterised in that** said robotic device (2) is an anthropomorphous robot and comprises, at its end portion, quick engagement means (20) configured to couple said plurality of instruments (5, 7, 9, 11, 13, 15, 17, 19, 21, 23, 25, 27).

7. Semi-automated system (1) for performing maintenance operations of a drawer (100) of a ladle (200) in safety conditions, according to one or more of the previous claims, **characterised in that** it comprises a manipulating device (63) adapted for picking up said components of said drawer (100) to arrange them in said deposit (6).

8. Semi-automated system (1) for performing maintenance operations of a drawer (100) of a ladle (200) in safety conditions, according to one or more of the previous claims, **characterised in that** said maintenance instruments (7, 9, 11, 23, 25) comprise at least one of:
- a first gripper instrument (7) configured to pick up, move and put down a thermal lance (70) adapted for carrying out a cleaning of the tapping hole of said drawer (100);
- a first cleaning instrument (9) comprising an abrasive brush (90) and a dispenser of a cleaning liquid, configured to clean said drawer (100) and/or said components of said drawer (100);
- a graphite delivery instrument (11);
- a second cleaning instrument (23) comprising a tubular body (230) configured to clean portions of said drawer (100) and/or of said components of said drawer (100) .

9. Semi-automated system (1) for performing maintenance operations of a drawer (100) of a ladle (200) in safety conditions, according to one or more of the previous claims, **characterised in that** said manipulating instruments (13, 15, 17, 19, 21, 27) each comprise a manipulating element (130, 150, 151, 170, 190, 210) configured to manipulate a respective component (109, 120, 102, 104, 103, 107) of said drawer (100).

10. Semi-automated system (1) for performing maintenance operations of a drawer (100) of a ladle (200) in safety conditions, according to one or more of the previous claims, **characterised in that** said viewing instrument (5) comprises integrated 2D and 3D viewing systems.

11. Semi-automated method for performing maintenance operations of a drawer (100) of a ladle (200) in safety conditions, wherein said drawer (100) comprises a fixed portion (101) fixed to said ladle (200) and a mobile portion (102), able to be opened with respect to said fixed portion (101), said fixed portion (101) being associated with a fixed refractory plate (103) comprising a fixed hole (105), whereas said mobile portion (102) is associated with a mobile refractory plate (104) comprising a mobile hole (106), said fixed portion (101) being also associated with a discharger (107) consisting of a perforated cylinder comprising a tapping hole (108), which faces inside said ladle (200), said method comprising the steps of:
- having a robotic device (2) adapted for carrying out a plurality of operations on said drawer (100) through a plurality of instruments (5, 7, 9, 11, 13, 15, 17, 19, 21, 23, 25, 27) housed in a store (3) and able to be picked up by said robotic device (2);
- picking up a viewing instrument (5) comprising 3D viewing systems from said store (3) through said robotic device (2);
- detecting points of interest of said drawer (100) and/or of components of said drawer (100) through said viewing instrument (5) in order to obtain at least the position of the fixed refractory plate (103) and of the mobile refractory plate (104) of said drawer (100) and in order to obtain the shape of said tapping hole (108);
- depositing said viewing instrument (5) in said store (3) through said robotic device (2);
- picking up a maintenance instrument (7, 9, 11, 23, 25) from said store (3) through said robotic device (2) ;
- carrying out the maintenance of said drawer (100) and/or of said components of said drawer (100) based on said points of interest detected by said viewing instrument (5);
- depositing said maintenance instrument (7, 9, 11, 23, 25) in said store (3) through said robotic device (2) ;
- picking up a manipulating instrument (13, 15, 17, 19, 21, 27) from said store (3) through said robotic device (2);
- manipulating said drawer (100) and/or said components of said drawer (100) based on said points of interest detected by said viewing instrument (5);
- depositing said manipulating instrument (13, 15, 17, 19, 21, 27) in said store (3) through said robotic device (2).

## Patentansprüche

1. Halbautomatisches System (1) zur Durchführung von Wartungsvorgängen an einem Schieber (100) einer Gießpfanne (200) unter Sicherheitsbedingungen, mit einer Robotervorrichtung (2), die dazu geeignet ist, eine Vielzahl von Vorgängen an dem Schieber (100) mittels einer Vielzahl von Instrumenten (5, 7, 9, 11, 13, 15, 17, 19, 21, 23, 25, 27) durchzuführen, die in einem Lagerraum (3) untergebracht sind und von der Robotervorrichtung (2) entnommen werden können, wobei der Schieber (100) einen festen Abschnitt (101), der an der Gießpfanne (200) befestigt ist, und einen beweglichen Abschnitt (102) umfasst, der in Bezug auf den festen Abschnitt (101) geöffnet werden kann, wobei der feste Abschnitt (101) mit einer festen feuerfesten Platte (103) verbunden ist, die ein festes Loch (105) aufweist, während der bewegliche Abschnitt (102) mit einer beweglichen feuerfesten Platte (104) verbunden ist, die ein bewegliches Loch (106) aufweist, wobei der feste Abschnitt (101) auch mit einer Entladevorrichtung (107) verbunden ist, die aus einem Hohlzylinder besteht, der ein Gewindeloch (108) aufweist, das in das Innere der Gießpfanne (200) weist, **dadurch gekennzeichnet, dass** die Vielzahl der Instrumente (5, 7, 9, 11, 13, 15, 17, 19, 21, 23, 25, 27) umfasst:
- mindestens ein Besichtigungsinstrument (5), das 3D-Besichtigungssysteme umfasst, die dazu geeignet sind, Punkte von Interesse des Schiebers (100) und/oder von Bestandteilen des Schiebers zu erfassen, um zumindest die Position der festen feuerfesten Platte (103) und der beweglichen feuerfesten Platte (104) des Schiebers (100) zu erhalten und die Form des Gewindelochs (108) zu erhalten;
- mindestens ein Wartungsinstrument (7, 9, 11, 23, 25), das dazu geeignet ist, die Wartung des Schiebers (100) und/oder von Bestandteilen des Schiebers (100) auf der Grundlage der von dem Besichtigungsinstrument (5) erfassten Punkte von Interesse durchzuführen;
- mindestens ein Handhabungsinstrument (13, 15, 17, 19, 21, 27), das dazu geeignet ist, den Schieber (100) und/oder Bestandteilen des Schiebers (100) auf der Grundlage der von dem Besichtigungsinstrument (5) erfassten Punkte von Interesse zu handhaben.

2. Halbautomatisches System (1) zur Durchführung von Wartungsvorgängen an einem Schieber (100) einer Gießpfanne (200) unter Sicherheitsbedingungen, gemäß Anspruch 1, **dadurch gekennzeichnet, dass** es einen Betriebsraum (4) umfasst, der die Steuerendgeräte (40) für die Vorgänge des halbautomatischen Systems (1) und ein Zugangsfenster (41) zum Arbeitsbereich der Robotervorrichtung (2) umfasst, wobei alle manuellen Routinevorgänge, die von einem Bediener durchgeführt werden können, ausschließlich vom Inneren des Betriebsraums (4) durch das Zugangsfenster (41) durchgeführt werden.

3. Halbautomatisches System (1) zur Durchführung von Wartungsvorgängen an einem Schieber (100) einer Gießpfanne (200) unter Sicherheitsbedingungen nach Anspruch 1 oder 2, **dadurch gekennzeichnet, dass** es einen Ablageraum (6) mit einer Vielzahl der Bestandteile des Schiebers (100) umfasst, wobei die Robotervorrichtung (2) so konfiguriert ist, dass sie die Bestandteile des Schiebers (100) aus dem Ablageraum (6) durch das mindestens eine Handhabungsinstrument (13, 15, 17, 19, 21, 27) entnimmt.

4. Halbautomatisches System (1) zur Durchführung von Wartungsvorgängen an einem Schieber (100) einer Gießpfanne (200) unter Sicherheitsbedingungen, gemäß Anspruch 3, **dadurch gekennzeichnet, dass** der Ablageraum (6) mindestens ein Zuführband (60, 61, 62) umfasst, das so konfiguriert ist, dass es eine oder mehrere der Bestandteile des Schiebers (100) zum Arbeitsbereich der Robotervorrichtung (2) transportiert.

5. Halbautomatisches System (1) zur Durchführung von Wartungsvorgängen an einem Schieber (100) einer Gießpfanne (200) unter Sicherheitsbedingungen nach einem oder mehreren der vorhergehenden Ansprüche, **dadurch gekennzeichnet, dass** es im Arbeitsbereich der Robotervorrichtung (2) eine Plattform (8) umfasst, die zu den Schieber (100) der Gießpfanne (200) hin und von ihr weg bewegt werden kann, wobei die Plattform (8) einen Hitzeschild (80) und eine Belüftungsvorrichtung (81) umfasst, wobei die Plattform (8) unter Sicherheitsbedingungen von einem Bediener verwendet werden kann, um außergewöhnliche manuelle Vorgänge durchzuführen.

6. Halbautomatisches System (1) zur Durchführung von Wartungsvorgängen an einem Schieber (100) einer Gießpfanne (200) unter Sicherheitsbedingungen nach einem oder mehreren der vorhergehenden Ansprüche, **dadurch gekennzeichnet, dass** die Robotervorrichtung (2) ein anthropomorpher Roboter ist und an ihrem Endabschnitt Schnelleingriffsmittel (20) umfasst, die so konfiguriert sind, dass sie die mehreren Instrumente (5, 7, 9, 11, 13, 15, 17, 19, 21, 23, 25, 27) koppeln.

7. Halbautomatisches System (1) zur Durchführung von Wartungsvorgängen an einem Schieber (100) einer Gießpfanne (200) unter Sicherheitsbedingungen nach einem oder mehreren der vorhergehenden Ansprüche, **dadurch gekennzeichnet, dass** es eine Handhabungsvorrichtung (63) umfasst, die dazu geeignet ist, die Komponenten der Schublade (100) zu entnehmen, um sie in den Ablageraum (6) anzuordnen.

8. Halbautomatisches System (1) zur Durchführung von Wartungsvorgängen an einem Schieber (100) einer Gießpfanne (200) unter Sicherheitsbedingungen nach einem oder mehreren der vorhergehenden Ansprüche, **dadurch gekennzeichnet, dass** die Wartungsinstrumente (7, 9, 11, 23, 25) mindestens eines der folgenden Elemente umfassen:
- ein erstes Greifinstrument (7), das so konfiguriert ist, dass es eine thermische Lanze (70) entnehmen, bewegen und ablegen kann, die dazu geeignet ist, eine Reinigung des Gewindelochs des Schiebers (100) durchzuführen;
- ein erstes Reinigungsinstrument (9), das eine Schleifbürste (90) und einen Spender für eine Reinigungsflüssigkeit umfasst, die zum Reinigen des Schiebers (100) und/oder der Bestandteile des Schiebers (100) konfiguriert ist;
- ein Graphitabgabeinstrument (11);
- ein zweites Reinigungsinstrument (23), das einen rohrförmigen Körper (230) umfasst, der so konfiguriert ist, dass er Abschnitte des Schiebers (100) und/oder der Bestandteile des Schiebers (100) reinigt.

9. Halbautomatisches System (1) zur Durchführung von Wartungsvorgängen an einem Schieber (100) einer Gießpfanne (200) unter Sicherheitsbedingungen nach einem oder mehreren der vorhergehenden Ansprüche, **dadurch gekennzeichnet, dass** die Handhabungssinstrumente (13, 15, 17, 19, 21, 27) jeweils ein Handhabungselement (130, 150, 151, 170, 190, 210) umfassen, das so konfiguriert ist, dass es einen entsprechenden Bestandteil (109, 120, 102, 104, 103, 107) des Schiebers (100) handhabt.

10. Halbautomatisches System (1) zur Durchführung von Wartungsvorgängen an einem Schieber (100) einer Gießpfanne (200) unter Sicherheitsbedingungen nach einem oder mehreren der vorhergehenden Ansprüche, **dadurch gekennzeichnet, dass** das Besichtigungsinstrument (5) integrierte 2D- und 3D-Besichtigungssysteme umfasst.

11. Halbautomatisches Verfahren zur Durchführung von Wartungsvorgängen an einem Schieber(100) einer Gießpfanne (200) unter Sicherheitsbedingungen, wobei der Schieber (100) einen festen Abschnitt (101), der an der Gießpfanne (200) befestigt ist, und einen beweglichen Abschnitt (102) umfasst, der in Bezug auf den festen Abschnitt (101) geöffnet werden kann, wobei der feste Abschnitt mit einer festen feuerfesten Platte (103) verbunden ist, die ein festes Loch (105) umfasst, während der bewegliche Abschnitt (102) mit einer beweglichen feuerfesten Platte (104) verbunden ist, die ein bewegliches Loch (106) aufweist, wobei der feste Abschnitt (101) auch mit einer Entladevorrichtung (107) verbunden ist, die aus einem Hohlzylinder besteht, der ein Gewindeloch (108) aufweist, das in das Innere der Gießpfanne (200) weist, wobei das Verfahren die folgenden Schritte umfasst:
- Aufweisen eine Robotervorrichtung (2), die dazu geeignet ist, eine Vielzahl von Vorgängen an dem Schieber (100) mittels einer Vielzahl von Instrumenten (5, 7, 9, 11, 13, 15, 17, 19, 21, 23, 25, 27) durchzuführen, die in einem Lagerraum (3) untergebracht sind und von der Robotervorrichtung (2) entnommen werden können;
- Entnehmen ein Besichtigungsinstruments (5) umfassend 3D-Besichtigungssysteme aus dem Lagerraum (3) durch die Robotervorrichtung (2);
- Erfassen Punkte von Interesse des Schiebers (100) und/oder von Bestandteilen des Schiebers (100) durch das Besichtigungsinstrument (5), um zumindest die Position der festen feuerfesten Platte (103) und der beweglichen feuerfesten Platte (104) des Schiebers (100) zu erhalten und die Form des Gewindelochs (108) zu erhalten;
- Ablegen das Besichtigungsinstruments (5) in den Lagerraum (3) durch die Robotervorrichtung (2);
- Entnehmen ein Wartungsinstrument (7, 9, 11, 23, 25) aus dem Lagerraum (3) durch die Robotervorrichtung (2);
- Durchführen die Wartung des Schiebers (100) und/oder der Bestandteile des Schiebers (100) auf der Grundlage der von dem Besichtigungsinstrument (5) erfassten Punkte von Interesse;
- Ablegen das Wartungsinstruments (7, 9, 11, 23, 25) in den Lagerraum (3) durch die Robotervorrichtung (2);
- Entnehmen ein Handhabungsinstruments (13, 15, 17, 19, 21, 27) aus dem Lagerraum (3) durch die Robotervorrichtung (2);
- Handhaben den Schieber (100) und/oder die Bestandteile des Schiebers (100) auf der Grundlage der von dem Besichtigungsinstrument (5) erfassten Punkte von Interesse;
- Ablegen das Handhabungsinstruments (13, 15, 17, 19, 21, 27) in den Lagerraum (3) durch die Robotervorrichtung (2).

## Revendications

1. Système semi-automatique (1) pour effectuer des opérations d'entretien d'un tiroir (100) d'une poche (200) dans des conditions de sécurité, comprenant un dispositif robotique (2) conçu pour effectuer une pluralité d'opérations sur ledit tiroir (100) par l'intermédiaire d'une pluralité d'instruments (5, 7, 9, 11, 13, 15, 17, 19, 21, 23, 25, 27) logés dans un magasin (3) et pouvant être prélevés par ledit dispositif robotique (2), dans lequel ledit tiroir (100) comprend une partie fixe (101) fixée à ladite poche (200) et une partie mobile (102) pouvant être ouverte par rapport à ladite partie fixe (101), ladite partie fixe (101) étant associée à une plaque réfractaire fixe (103) comprenant un trou fixe (105), tandis que ladite partie mobile (102) est associée à une plaque réfractaire mobile (104) comprenant un trou mobile (106), ladite partie fixe (101) étant également associée à un déchargeur (107) constitué d'un cylindre perforé comprenant un trou de coulée (108), qui fait face à l'intérieur de ladite poche (200), **caractérisé en ce que** ladite pluralité d'instruments (5, 7, 9, 11, 13, 15, 17, 19, 21, 23, 25, 27) comprend:
- au moins un instrument de visualisation (5) comprenant des systèmes de visualisation 3D conçus pour détecter des points d'intérêt dudit tiroir (100) et/ou de composants dudit tiroir afin d'obtenir au moins la position de la plaque réfractaire fixe (103) et de la plaque réfractaire mobile (104) dudit tiroir (100), et d'obtenir la forme dudit trou de coulée (108);
- au moins un instrument d'entretien (7, 9, 11, 23, 25) conçu pour effectuer l'entretien dudit tiroir (100) et/ou de composants dudit tiroir (100) sur la base desdits points d'intérêt détectés par ledit instrument de visualisation (5);
- au moins un instrument de manipulation (13, 15, 17, 19, 21, 27) conçu pour manipuler ledit tiroir (100) et/ou des composants dudit tiroir (100) sur la base desdits points d'intérêt détectés par ledit instrument de visualisation (5).

2. Système semi-automatique (1) pour effectuer des opérations d'entretien d'un tiroir (100) d'une poche (200) dans des conditions de sécurité selon la revendication 1, **caractérisé en ce qu'**il comprend une salle d'opération (4) comprenant les terminaux de commande (40) des opérations dudit système semi-automatique (1) et une fenêtre d'accès (41) à la zone de travail dudit dispositif robotique (2), toutes les opérations manuelles courantes pouvant être effectuées par un opérateur étant effectuées exclusivement depuis l'intérieur de ladite salle d'opération (4) à travers ladite fenêtre d'accès (41).

3. Système semi-automatique (1) pour effectuer des opérations d'entretien d'un tiroir (100) d'une poche (200) dans des conditions de sécurité selon la revendication 1 ou 2, **caractérisé en ce qu'**il comprend un dépôt (6) d'une pluralité desdits composants dudit tiroir (100), ledit dispositif robotique (2) étant conçu pour prélever lesdits composants dudit tiroir (100) depuis ledit dépôt (6) par l'intermédiaire dudit au moins un instrument de manipulation (13, 15, 17, 19, 21, 27).

4. Système semi-automatique (1) pour effectuer des opérations d'entretien d'un tiroir (100) d'une poche (200) dans des conditions de sécurité selon la revendication 3, **caractérisé en ce que** ledit dépôt (6) comprend au moins une courroie d'alimentation (60, 61, 62) conçue pour transporter un ou plusieurs desdits composants dudit tiroir (100) vers la zone de travail dudit dispositif robotique (2).

5. Système semi-automatique (1) pour effectuer des opérations d'entretien d'un tiroir (100) d'une poche (200) dans des conditions de sécurité selon une ou plusieurs des revendications précédentes, **caractérisé en ce qu'**il comprend, dans la zone de travail dudit dispositif robotique (2), une plate-forme (8) mobile vers et à l'écart dudit tiroir (100) de ladite poche (200), ladite plate-forme (8) comprenant un bouclier thermique (80) et un dispositif de ventilation (81), ladite plate-forme (8) pouvant être utilisée dans des conditions de sécurité par un opérateur pour effectuer des opérations manuelles extraordinaires.

6. Système semi-automatique (1) pour effectuer des opérations d'entretien d'un tiroir (100) d'une poche (200) dans des conditions de sécurité selon une ou plusieurs des revendications précédentes, **caractérisé en ce que** ledit dispositif robotique (2) est un robot anthropomorphe et comprend, à sa partie d'extrémité, des moyens d'engagement rapide (20) conçus pour se coupler à ladite pluralité d'instruments (5, 7, 9, 11, 13, 15, 17, 19, 21, 23, 25, 27).

7. Système semi-automatique (1) pour réaliser des opérations d'entretien d'un tiroir (100) d'une poche (200) dans des conditions de sécurité selon une ou plusieurs des revendications précédentes, **caractérisé en ce qu'**il comprend un dispositif de manipulation (63) conçu pour saisir lesdits composants dudit tiroir (100) pour les disposer dans ledit dépôt (6).

8. Système semi-automatisé (1) pour réaliser des opérations d'entretien d'un tiroir (100) d'une poche (200) dans des conditions de sécurité selon une ou plusieurs des revendications précédentes, **caractérisé en ce que** lesdits instruments d'entretien (7, 9, 11, 23, 25) comprennent au moins l'un des suivants:
- un premier instrument de préhension (7) conçu pour prélever, déplacer et déposer une lance thermique (70) conçue pour effectuer un nettoyage du trou de coulée dudit tiroir (100);
- un premier instrument de nettoyage (9) comprenant une brosse abrasive (90) et un distributeur de liquide de nettoyage, conçu pour nettoyer ledit tiroir (100) et/ou lesdits composants dudit tiroir (100);
- un instrument de distribution de graphite (11);
- un second instrument de nettoyage (23) comprenant un corps tubulaire (230) conçu pour nettoyer des parties dudit tiroir (100) et/ou desdits composants dudit tiroir (100).

9. Système semi-automatique (1) pour effectuer des opérations d'entretien d'un tiroir (100) d'une poche (200) dans des conditions de sécurité selon une ou plusieurs des revendications précédentes, **caractérisé en ce que** lesdits instruments de manipulation (13, 15, 17, 19, 21, 27) comprennent chacun un élément de manipulation (130, 150, 151, 170, 190, 210) conçu pour manipuler un composant respectif (109, 120, 102, 104, 103, 107) dudit tiroir (100).

10. Système semi-automatique (1) pour effectuer des opérations d'entretien d'un tiroir (100) d'une poche (200) dans des conditions de sécurité selon une ou plusieurs des revendications précédentes, **caractérisé en ce que** ledit instrument de visualisation (5) comprend des systèmes de visualisation 2D et 3D intégrés.

11. Procédé semi-automatique pour effectuer des opérations d'entretien d'un tiroir (100) d'une poche (200) dans des conditions de sécurité, dans lequel ledit tiroir (100) comprend une partie fixe (101) fixée à ladite poche (200) et une partie mobile (102) pouvant être ouverte par rapport à ladite partie fixe (101), ladite partie fixe étant associée à une plaque réfractaire fixe (103) comprenant un trou fixe (105), tandis que ladite partie mobile (102) est associée à une plaque réfractaire mobile (104) comprenant un trou mobile (106), ladite partie fixe (101) étant également associée à un déchargeur (107) constitué d'un cylindre perforé comprenant un trou de coulée (108), qui fait face à l'intérieur de ladite poche (200), ledit procédé comprenant les étapes consistant à:
- fournir un dispositif robotique (2) conçu pour effectuer une pluralité d'opérations sur ledit tiroir (100) par l'intermédiaire d'une pluralité d'instruments (5, 7, 9, 11, 13, 15, 17, 19, 21, 23, 25, 27) logés dans un magasin (3) et pouvant être prélevés par ledit dispositif robotique (2);
- prélever un instrument de visualisation (5) comprenant des systèmes de visualisation 3D dans ledit magasin (3) par l'intermédiaire dudit dispositif robotique (2);
- détecter des points d'intérêt dudit tiroir (100) et/ou de composants dudit tiroir (100) par l'intermédiaire dudit instrument de visualisation (5) afin d'obtenir au moins la position de la plaque réfractaire fixe (103) et de la plaque réfractaire mobile (104) dudit tiroir (100) et afin d'obtenir la forme dudit trou de coulée (108);
- déposer ledit instrument de visualisation (5) dans ledit magasin (3) par l'intermédiaire dudit dispositif robotique (2);
- prélever un instrument d'entretien (7, 9, 11, 23, 25) dans ledit magasin (3) par l'intermédiaire dudit dispositif robotique (2);
- effectuer l'entretien dudit tiroir (100) et/ou desdits composants dudit tiroir (100) sur la base desdits points d'intérêt détectés par ledit instrument de visualisation (5);
- déposer ledit instrument d'entretien (7, 9, 11, 23, 25) dans ledit magasin (3) par l'intermédiaire dudit dispositif robotique (2);
- prélever un instrument de manipulation (13, 15, 17, 19, 21, 27) dans ledit magasin (3) par l'intermédiaire dudit dispositif robotique (2);
- manipuler ledit tiroir (100) et/ou lesdits composants dudit tiroir (100) sur la base desdits points d'intérêt détectés par ledit instrument de visualisation (5);
- déposer ledit instrument de manipulation (13, 15, 17, 19, 21, 27) dans ledit magasin (3) par l'intermédiaire dudit dispositif robotique (2).
